(19)

**Europäisches Patentamt**
**European Patent Office**
**Office européen des brevets**

(11)  **EP 2 005 135 B1**

(12)  **EUROPÄISCHE PATENTSCHRIFT**

(45) Veröffentlichungstag und Bekanntmachung des Hinweises auf die Patenterteilung:
**21.07.2010  Patentblatt 2010/29**

(21) Anmeldenummer: **07724005.9**

(22) Anmeldetag: **04.04.2007**

(51) Int Cl.:
***G01M 3/22*** *(2006.01)*

(86) Internationale Anmeldenummer:
**PCT/EP2007/003064**

(87) Internationale Veröffentlichungsnummer:
**WO 2007/118615 (25.10.2007 Gazette 2007/43)**

(54) **VERFAHREN UND VORRICHTUNG ZUR LECKPRÜFUNG**

METHOD AND APPARATUS FOR THE DETECTION OF LEAKS

PROCÉDÉ ET DISPOSITIF DE CONTRÔLE DES FUITES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **10.04.2006  DE 102006016747**

(43) Veröffentlichungstag der Anmeldung:
**24.12.2008  Patentblatt 2008/52**

(73) Patentinhaber:
• **Brockmann, Robert**
  **17489 Greifswald (DE)**
  Benannte Vertragsstaaten:
  **AT BE BG CH LI CY CZ DK EE ES FI FR GB GR HU IE IS IT LT LU LV MC MT NL PL PT RO SE SI SK TR**
• **Max-Planck-Gesellschaft zur Förderung der Wissenschaften e.V.**
  **80539 München (DE)**
  Benannte Vertragsstaaten:
  **DE**

(72) Erfinder:
• **Brockmann, Robert**
  **17489 Greifswald (DE)**
• **Max-Planck-Gesellschaft zur Förderung der Wissenschaften e.V.**
  **80539 München (DE)**

(74) Vertreter: **Hertz, Oliver**
  **v. Bezold & Partner**
  **Patentanwälte**
  **Akademiestrasse 7**
  **80799 München (DE)**

(56) Entgegenhaltungen:
**EP-A- 0 852 712          DE-A1- 10 306 245**
**DE-A1- 10 316 332     DE-A1- 19 755 794**

**Beschreibung**

Die Erfindung betrifft ein Verfahren zur Leckprüfung, insbesondere zur Detektion eines Leckgases z. B. an einer Vakuumeinrichtung, mit einer Spülgasmethode. Des Weiteren betrifft die Erfindung eine Leckprüfvorrichtung zur Durchführung des Verfahrens.

In der Forschung und in der industriellen Technik bestehen zahlreiche Anwendungen für Vakuumeinrichtungen. In Abhängigkeit von den konkreten Betriebsbedingungen werden an die Aufrechterhaltung des Vakuums in der Vakuumeinrichtung bestimmte Anforderungen gestellt. Der Eintritt von Gasen aus der Umgebung durch Lecks in die Vakuumeinrichtung soll möglichst unterdrückt werden. Beispielsweise besteht bei Vakuumeinrichtungen für die Plasmaforschung die Anforderung, dass sämtliche Bauteile bei allen Betriebstemperaturen Leckraten unterhalb von $10^{-10}$ Pa m$^3$/s aufweisen. Die Lecksuche stellt auch bei anderen Techniken wie bei chemischen Anlagen oder Verbrennungsanlagen eine Herausforderung dar, z. B. um einen unerwünschten Austritt eines Gases in die Umgebung zu verhindern.

Als Techniken zur Leckprüfung sind insbesondere das Vakuumverfahren, die Überdruckmethode und die Schnüffelprüfung bekannt. Ein Nachteil des Vakuumverfahrens besteht darin, dass eine an die Geometrie des zu prüfenden Bauteils angepasste Vakuumkammer vorhanden sein muss. Bei komplexen Vakuumeinrichtungen ergibt sich dadurch ein extrem hoher Prüfaufwand. Ein Nachteil der Überdruckmethode und der Schnüffelprüfung besteht in dem erheblichen Zeitaufwand dieser Techniken. Des Weiteren liegen die Nachweisgrenzen dieser Methoden bisher im Bereich von $10^{-5}$ bis $10^{-7}$ Pa m$^3$/s und damit deutlich oberhalb der oben geforderten Leckrate. Ein weiterer Nachteil der herkömmlichen Schnüffelprüfung besteht darin, dass mit dieser bisher Leckprüfungen an Bauteilen nicht möglich sind, die bis zur Temperatur von flüssigem Stickstoff gekühlt sind.

Die Lokalisierung von Lecks mit der Schnüffelmethode oder der Überdruckmethode ist bei komplex aufgebauten Anlagen schwierig oder sogar unmöglich. Daher wurde eine Spülgasmethode zur Leckprüfung entwickelt. Ein Beispiel für die Anwendung der Spülgasmethode ist in DE 103 06 245 beschrieben. Um ein zu prüfendes Bauteil wird mit einem Gehäuse ein lokaler Gasraum geschaffen, in dem sich ein Spülgas befindet. Der lokale Gasraum, in dem sich das Spülgas befindet, wird auf Spuren eines Leckgases untersucht, mit dem ein Innenraum des Bauteils beaufschlagt worden ist. Die Leckgassuche erfolgt z. B. wie bei der Schnüffelprüfung mit einem Massenspektrometer. Bei der in DE 103 06 245 beschriebenen Technik wird als Spülgas Umgebungsluft in das Gehäuse angesaugt. Diese Methode ist jedoch wegen der ungenügenden Reinheit der Umgebungsluft für die Leckprüfung mit extremen Nachweisgrenzen ungeeignet, wie sie z. B. bei Vakuumeinrichtungen erforderlich sind.

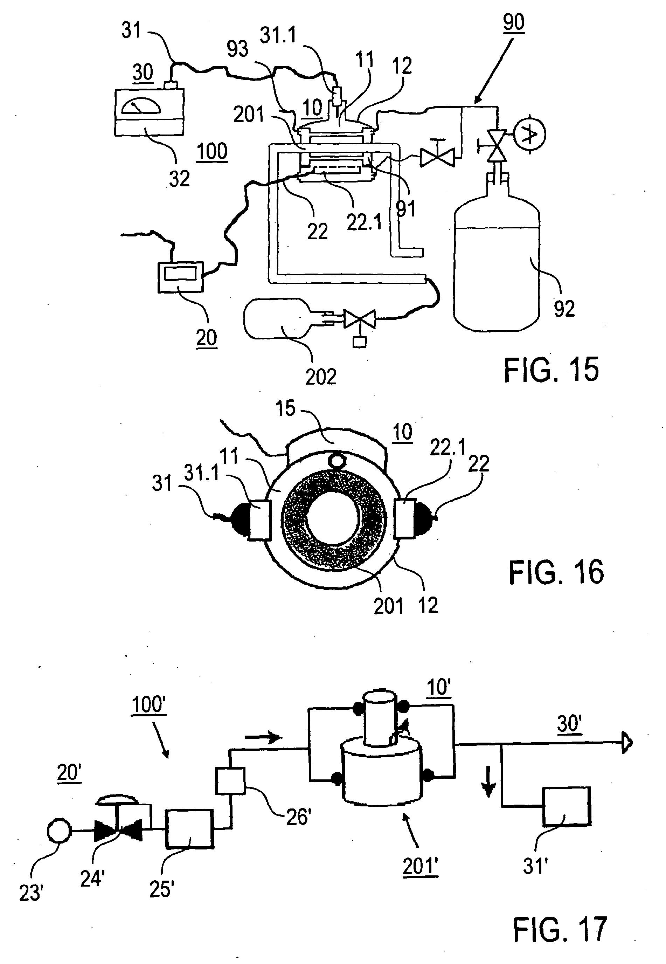

Aus einem Vortrag auf der DGZfP-Jahrestagung "Zerstörungsfreie Materialprüfung", 21.-23. Mai 2001, Berlin (Berichtsband 75) und der darauf aufbauenden Norm DIN ISO 15848-1 ist eine Variante der Spülgasmethode bekannt, bei der zur Spülung nicht Umgebungsluft, sondern ein Spülgas aus einer Spülgasquelle verwendet wird. Bei dieser Technik, die schematisch in Figur 17 illustriert ist, umfasst eine Leckprüfvorrichtung 100' eine Spüleinrichtung 10' an einem zu prüfenden Bauteil 201', eine Gaszufuhreinrichtung 20', mit der das Spülgas in die Spüleinrichtung 10' einführbar ist, und eine Detektoreinrichtung 30' zur Detektion von Leckgas im Spülgas, das aus der Spüleinrichtung 10' austritt. Die Gaszufuhreinrichtung 20' umfasst eine Spülgasquelle 23', einen Druckregler 24', eine Durchflussregelung 25' und ein Durchflussmessgerät 26'. Mit der Gaszufuhreinrichtung 20' wird ein bestimmter Systemstrom des Spülgases erzeugt, der unter der Wirkung eines mit den Komponenten 24' bis 26' eingestellten und überwachten Überdruckes in die Spüleinrichtung 10' eingeführt wird (siehe Pfeil).

Um mit dem Detektor 31' der Detektoreinrichtung 30' eine genaue und reproduzierbare Messung durchführen zu können, müssen bei der Einstellung des Systemstroms die folgenden Anforderungen erfüllt werden. In der Spüleinrichtung 10' muss ein konstanter Überdruck gehalten werden. Der Systemstrom muss so eingestellt werden, dass der durch das Ausströmen von Spülgas zu der Detektoreinrichtung 30' entstehende Druckverlust kompensiert wird. Ein Problem besteht darin, dass dieser Druckverlust in der Praxis nicht konstant ist. So kann es durch Temperaturänderungen, Formänderungen der Spüleinrichtung 10', die z. B. durch eine flexible Hülle gebildet wird, oder ein Einstechen einer Sonde der Detektoreinrichtung 30' in die Spüleinrichtung 10' zu Druckschwankungen kommen, die unmittelbar das Messergebnis des Detektors 31' beeinträchtigen.

Des Weiteren wird bei der herkömmlichen Technik zur Vermeidung einer Rückdiffusion von Umgebungsluft über die Detektoreinrichtung 30' in die Spüleinrichtung 10' ein relativ großer Systemstrom benötigt. Dieser ist nachteilig mit größeren Druckschwankungen in der Spüleinrichtung 10' und dadurch mit einer verschlechterten Nachweisgrenze der Leckgasprüfung verbunden.

Die herkömmliche Technik gemäß Figur 17 hat daher den Nachteil, dass die genannten Anforderungen an die Leckprüfung nur schwer erfüllt werden können und die Einstellung des Systemstroms des Spülgases nur mit einer beschränkten Genauigkeit möglich ist.

Aus DE 103 16 332 A1 sind ein Verfahren und eine Vorrichtung zur Prüfung der Dichtheit von Produkten bekannt, deren Herstellung mit dem Einschluss eines Fluids als Bestandteil des Produkts verbunden ist. Dabei ist vorgesehen, ein aus einem Prüfexemplar ohne äußere Unterdruckeinwirkung austretendes Fluidbestandteil des Produkts mit einem Sensor quantitativ zu verfassen und dem ermittelten Sensor-Messwert mit einem Grenzwert zu vergleichen.

Die Aufgabe der Erfindung ist es, ein verbessertes Verfahren zur Leckprüfung bereitzustellen, mit dem die Nachteile der herkömmlichen Techniken überwunden werden und das sich insbesondere durch eine stabilere Einstellung eines Spülgasstromes, eine verbesserte Nachweisgrenze der Leckgasdetektion und eine erhöhte Prüfgeschwindigkeit auszeichnet. Des Weiteren soll das Verfahren mit hoher Flexibilität an verschiedene Einsatzbedingungen angepasst und automatisiert ausgeführt werden können. Die Aufgabe der Erfindung ist es ferner, eine verbesserte Leckprüfvorrichtung bereitzustellen, mit der die Nachteile der herkömmlichen Leckprüfvorrichtungen überwunden werden und die eine Leckprüfung mit einer verbesserten Nachweisgrenze und einer erhöhten Geschwindigkeit ermöglicht.

Diese Aufgaben werden durch Verfahren und Vorrichtungen mit den Merkmalen der Patentansprüche 1 und 17 gelöst. Vorteilhafte Ausführungsformen und Anwendungen der Erfindung ergeben sich aus den abhängigen Ansprüchen.

Verfahrensbezogen basiert die Erfindung auf der allgemeinen technischen Lehre, ein reines Spülgas zur Leckprüfung mit einem detektorseitig erzeugten Unterdruck durch eine Spüleinrichtung an einem zu prüfenden Teil, z. B. einer Vakuumeinrichtung zu leiten, wobei das durch die Spüleinrichtung geleitete Spülgas aus einem Hauptstrom abgezweigt wird. Erfindungsgemäß wird ein vorbestimmter, ggf. einstellbarer Hauptstrom des leck- oder testgasfreien Spülgases erzeugt und in einen Systemstrom zur Durchleitung durch einen Spülraum der Spüleinrichtung und einen Teilstrom zur Ableitung, z. B. in die Umgebung oder in ein Regenerationsgefäß geteilt. Der in den Spülraum zugeführte Systemstrom entspricht genau dem vom Detektor abgesaugten Detektorstrom. Wenn vom zu prüfenden Teil in die Spüleinrichtung Leck- oder Testgas eintritt, kann dieses mit dem Detektor nachgewiesen werden.

Wenn durch bestimmte Betriebsbedingungen der Druck im Spülraum schwankt, führt dies gleichzeitig zu einer entsprechenden Änderung des zugeführten Systemstroms. Die Zuführung des Systemstroms wird daher auch als Nachführung bezeichnet. Eventuelle Druckschwankungen werden vorteilhafterweise automatisch ausgeglichen, so dass die Probleme der herkömmlichen Technik in Bezug auf die Stabilität des durch die Spüleinrichtung geleiteten Spülgasstromes vermieden werden. Entsprechend wird eine erhöhte Genauigkeit und Reproduzierbarkeit der Detektion des Leckgases erreicht, das in dem von der Spüleinrichtung austretenden Spülgas ggf. enthalten ist.

Im Unterschied zur herkömmlichen Technik wird der Volumenstrom des Spülgases durch die Spüleinrichtung nicht durch eine einlassseitige Durchflussregelung oder Druckregelung, sondern durch den Druck in der Spüleinrichtung mit der genannten Teilung des Hauptstroms eingestellt. Zumindest während der Leckprüfung kann das System detektorseitig gegenüber der Umgebung abgeschlossen sein. Vorteilhafterweise kann der Druck in der Spüleinrichtung so eingestellt werden, dass nur der zur Leckgasdetektion durch den jeweils verwendeten Leckgasdetektor benötigte Volumenstrom des Spülgases aus dem geteilten Hauptstrom abgeleitet wird. Ein erhöhter Volumenstrom zur Vermeidung einer Rückdiffusion aus der Umgebung, wie dies bei der herkömmlichen Technik erforderlich ist, kann damit vermieden werden. Vorteilhafterweise wird damit der Spülgasverbrauch gesenkt und außerdem die Genauigkeit der Einstellung des Systemstroms erhöht.

Vorteilhafterweise wird erfindungsgemäß lediglich ein geringerer Volumenstromwert eingestellt, was mit erhöhter Genauigkeit und Stabilität möglich ist. Durch die Einstellung des Teilstroms kann mit hoher Genauigkeit der Druck in einem Gasraum an einem zu prüfenden Teil z. B. einer Vakuumeinrichtung eingestellt werden. Vorteilhafterweise können Störungen, z. B. bei nicht vollkommen hermetisch geschlossenen Hüllen zur Bildung des Gasraumes oder bei Volumenänderungen ausgeglichen werden.

Die erfindungsgemäße Teilstromregelung ermöglicht ferner, dass mit dem Systemstrom des Spülgases, der in den Gasraum zugeführt wird, gerade der Druckverlust durch die Abfuhr von Spülgas zu einer Detektoreinrichtung und durch eventuelle Undichtigkeiten kompensiert wird. Die Konzentration des Leckgases wird nicht in einem aus dem Gasraum abströmenden Spülgasstrom, sondern in einem Sondenstrom erfasst. Durch die Teilstromregelung muss lediglich der Differenzdruck im Gasraum gegenüber der Umgebung aufrechterhalten werden, in der bspw. Atmosphärendruck herrscht.

Vorrichtungsbezogen wird die o. g. Aufgabe entsprechend durch eine Leckprüfvorrichtung gelöst, bei der eine Gaszufuhreinrichtung zur Durchleitung eines Spülgases durch die Spüleinrichtung an einem zu prüfenden Bauteil mit einer Teilereinrichtung zur Teilung eines Hauptstroms in einen Systemstrom und einen Teilstrom ausgestattet ist. Der Systemstrom wird aus dem Hauptstrom abgezweigt und in die Spüleinrichtung zugeführt. Der zugeführte Volumenstrom entspricht dem Volumenstrom, der von einer Einrichtung, zum Beispiel mit der Detektoreinrichtung oder einer Saugpumpe auf der Auslassseite der Spüleinrichtung abgesaugt wird.

Ein wichtiger Vorteil der Erfindung besteht darin, dass die Leckprüfvorrichtung mit der Gaszufuhreinrichtung und der Detektoreinrichtung für eine zuverlässige Leckprüfung bei den verschiedensten Arten von Spüleinrichtungen angewendet werden kann. Durch die erfindungsgemäße Teilstromtechnik kann der Druck im Gasraum der Spüleinrichtung in jedem Fall mit hoher Genauigkeit eingestellt werden. Der Gasraum kann bspw. von einer flexiblen Hülle oder einem Gehäuse mit festen Wänden umgeben werden.

Wenn gemäß einer bevorzugten Ausführungsform der Erfindung die Teilereinrichtung durch eine Drei-Wege-Verzweigung (Drei-Wege-Verbindung) gebildet wird, ergibt sich ein besonders einfacher Aufbau der Gaszufuhreinrichtung. Durch einen Zweig der Drei-Wege-Verbindung wird der Hauptstrom zugeführt, während durch die übrigen zwei Zweige der Teilstrom und der Systemstrom abgeleitet werden. Vorteilhafterweise bestehen keine Beschränkungen in Bezug auf die geometrische Ausrichtung der Zweige relativ zueinander. Beispielsweise kann die Drei-Wege-Verbindung, an der sich eine Hauptstromleitung in eine Systemstromleitung und eine Teilstromleitung teilt, durch ein T-Stück gebildet werden.

Gemäß einer bevorzugten Variante umfasst die Drei-Wege-Verbindung eine Teilstromkammer, mit der die Hauptstromleitung, die Systemstromleitung und die Teilstromleitung verbunden sind. In der Teilstromkammer wird vorteilhafterweise ein Pufferraum geschaffen, in den der Hauptstrom eingeleitet und aus dem der Teilstrom und der Systemstrom abgeleitet werden. Vorteilhafterweise ermöglicht dies eine schwingungsfreie und stetige Zuführung des abgesaugten Detektorstroms. Diese Wirkung kann noch verbessert werden, wenn in der Teilstromkammer am Abzweig der Systemstromleitung eine Drosseleinrichtung, wie z. B. ein Porösfiltereinsatz oder eine Drosselblende vorgesehen ist, um eventuelle Druckschwankungen bei der Einstellung des Hauptstroms auszugleichen.

Gemäß einer bevorzugten Ausführungsform des erfindungsgemäßen Leckprüfungsverfahrens ist eine Einstellung des Teilstroms vorgesehen, so dass der Teilstrom einen vorbestimmten Volumenstromwert aufweist. Vorteilhafterweise kann dadurch an der Teilereinrichtung ein vorbestimmter Betriebsdruck in der Spüleinrichtung eingestellt werden.

Die Einstellung des Teilstroms erfolgt gemäß einer bevorzugten Ausführungsform der Erfindung, indem in der Teilstromleitung, durch die der Teilstrom abgeleitet wird, ein vorbestimmter Strömungswiderstand vorgesehen ist. Vorteilhafterweise kann allein durch die Einstellung des Strömungswiderstandes in der Teilstromleitung der Teilstrom des Spülgases auf den gewünschten Wert eingestellt werden. Ein weiterer Vorteil der Einstellung des Strömungswiderstandes besteht in der Variabilität verschiedener Maßnahmen, die einzeln oder in Kombination zur Einstellung des Teilstroms vorgesehen sein können. Wenn bspw. eine Teilstromleitung mit einem vorbestimmten Durchmesser verwendet wird, um einen gewünschten Strömungswiderstand zu erzeugen, wird der Aufbau der Teilstromregelung erheblich vereinfacht. Die Teilereinrichtung kann allein durch das T-Stück gebildet werden, dessen Abzweig zur Ableitung des Teilstroms den geeignet gewählten Durchmesser aufweist. Entsprechendes gilt, falls gemäß einer abgewandelten Variante eine Teilstromleitung mit einer bestimmten Länge zur Einstellung des Strömungswiderstandes verwendet wird. Wenn der Strömungswiderstand mit einer Teilstrom-Stelleinrichtung, wie z. B. einem Dosierventil in der Teilstromleitung eingestellt wird, können sich Vorteile für die Genauigkeit und Variabilität der Teilstromeinstellung ergeben. Wenn die Teilstrom-Stelleinrichtung manuell betätigt wird, vereinfacht sich vorteilhafterweise der Aufbau der erfindungsgemäß vorgesehenen Gaszufuhreinrichtung. Wenn die Teilstrom-Stelleinrichtung elektrisch betätigt wird und z. B. ein Magnetventil umfasst, wird vorteilhafterweise eine Steuerung der Teilstrom-Stelleinrichtung vereinfacht. Alternativ kann eine Einstellung der Teilstrom-Stelleinrichtung mit einem Differenzdruckmanometer vorgesehen sein. Der Druckunterschied in der Teilstromleitung gegenüber der Umgebung kann als Maß für den Druckunterschied in der Spüleinrichtung gegenüber der Umgebung verwendet werden. Wenn der Abfluss des Spülgases aus der Spüleinrichtung zunimmt und dadurch der Druck in der Spüleinrichtung abnimmt, fällt entsprechend auch der Druck in der Teilstromleitung. Sobald mit dem Differenzdruckmanometer erfasst wird, dass ein vorbestimmter Differenzdruck unterschritten wird, kann die Teilstrom-Stelleinrichtung betätigt werden. Durch ein schrittweises Schließen der Teilstrom-Stelleinrichtung kann der Strömungswiderstand in der Teilstromleitung erhöht und damit der Druck in der Spüleinrichtung erhöht werden.

Bei der Einstellung eines festen Teilstroms, z. B. durch den Strömungswiderstand in der Teilstromleitung kann die geeignete Einstellung mit dem folgenden Test geprüft werden. Ein freies Ende des Teilzweiges z. B. ein Schlauch wird in ein Flüssigkeitsbad, z. B. mit Wasser getaucht. Wenn bei der Leckgasprüfung aus dem Teilzweig im Flüssigkeitsbad Blasen aufsteigen, ist der Teilstrom ausreichend eingestellt.

Wenn gemäß einer weiteren bevorzugten Ausführungsform der Erfindung eine Einstellung des Volumenstromwertes des Hauptstroms vorgesehen ist, kann die Gaszufuhr des Spülgases vorteilhafterweise optimal an die Betriebsbedingungen der Leckprüfung angepasst werden. Zur Einstellung des Hauptstroms ist die Gaszufuhreinrichtung mit einer Hauptstrom-Stelleinrichtung ausgestattet.

Zur Einstellung des Hauptstroms können verschiedene Maßnahmen einzeln oder in Kombination vorgesehen sein. Die Bereitstellung einer Druckeinstellung des Hauptstroms kann vorteilhafterweise besonders einfach bedient werden. In diesem Fall umfasst die Hauptstrom-Stelleinrichtung vorzugsweise einen Druckregler. Wird die Hauptstrom-Stelleinrichtung durch ein Magnetventil gebildet, kann eine Takteinstellung des Hauptstroms realisiert werden. Gemäß einer weiteren Alternative kann eine Durchflusseinstellung, z. B. mit einem manuell oder elektrisch betätigbaren Ventil vorgesehen sein. Die Takt- und Durchflusseinstellung des Hauptstroms sind vorteilhafterweise besonders für eine Regelung des Hauptstroms in Abhängigkeit von Betriebsbedingungen der Leckprüfung geeignet. Entsprechend ist gemäß einer besonders vorteilhaften Variante der Erfindung eine Regelung des Hauptstroms (hier: erste Regelung) vorgesehen, bei der die Hauptstrom-Stelleinrichtung vorzugsweise in Abhängigkeit vom Druck in der Spüleinrichtung und/oder in der Detektoreinrichtung eingestellt wird.

Gemäß einer weiteren bevorzugten Ausführungsform der Erfindung wird auch der Teilstrom in der Teilstromleitung mit einer Regelung (hier: zweite Regelung) gesteuert. Vorteilhafterweise ermöglicht dies eine automatische Einstellung des Teilstroms und dadurch indirekt eine Regelung des Systemstroms des Spülgases. Vorzugsweise wird der Teilstrom in Abhängigkeit von wenigstens einer der Betriebgrößen der Leckprüfung geregelt, die den Druck in der Spüleinrichtung und den Druck in der Detektoreinrichtung umfassen. Besondere Vorteile der betriebsgrößenabhängigen Regelung des Teilstroms bestehen darin, dass in der Spüleinrichtung ein konstanter Druck mit erhöhter Stabilität einstellbar ist. Des Weiteren können in Abhängigkeit von der konkreten Anwendung verschiedene Drucke in der Spüleinrichtung eingestellt werden. Ein weiterer Vorteil besteht in der Möglichkeit, ein Verschwinden des Systemstroms festzustellen, der bspw. durch eine Entleerung der Spülgasquelle oder durch einen Betriebsfehler verursacht wird. Dieses liegt zum Beispiel, vor, wenn durch Leckagen innerhalb der Hülle der Verlustvolumenstrom eine vorbestimmte, zulässige Größe überschreitet.

Gemäß einer weiteren vorteilhaften Ausführungsform der Erfindung ist eine Kalibrierung der Detektoreinrichtung zur Erfassung des Leckgases vorgesehen. Mit einer Kalibrierungseinrichtung wird eine weitere Verbesserung der Genauigkeit und Reproduzierbarkeit der Leckprüfung erzielt. Zur Kalibrierung kann der Systemstrom zeitweilig an der Spüleinrichtung vorbeigeleitet und direkt mit der Detektoreinrichtung erfasst werden. Diese Kalibrierungsmessung liefert eine Bezugsgröße, die nicht durch Leckgas beeinflusst ist, welches vom zu prüfenden Bauteil in das Spülgas übergegangen ist. Alternativ kann zur Kalibrierung ein Kalibrierungsstrom zur Detektoreinrichtung geleitet werden, der von einer Kalibrierungsgasquelle gespeist wird. Vorzugsweise wird der Kalibrierungsstrom analog zum Systemstrom des Spülgases mit einer Teilstromregelung eingestellt.

Gemäß einer weiteren Variante kann eine Injektion eines Kalibrierungsgases in den Systemstrom vorgesehen sein, um eine genaue und reproduzierbare Bezugsgröße für die Detektoreinrichtung zu erhalten. Vorteilhafterweise kann die Injektion an der Teilereinrichtung der Spülgaszufuhreinrichtung oder direkt an der Spüleinrichtung vorgesehen sein. Vorteilhafterweise besteht eine Vielzahl von Möglichkeiten zur Injektion des Kalibrierungsgases, wie z. B. mit einer Spritzeninjektion, einer Injektion mittels eines Testlecks, einer Injektion mittels eines Hubventils oder eine Pumpeninjektion.

Wenn gemäß einer weiteren Ausführungsform die erfindungsgemäß verwendete Teilereinrichtung der Gaszufuhreinrichtung gegenüber einer Umgebung verschlossen ist, können sich Vorteile durch die Unterbindung einer Diffusion unerwünschter Gase aus der Umgebung in den Systemstrom ergeben. Dieses ist bei der Lecksuche im Kalten von besonderem technischen Belang.

Wenn die Spüleinrichtung gemäß einer weiteren Variante der Erfindung Teil der Leckprüfvorrichtung ist, können sich Vorteile für die Anpassung der Spüleinrichtung an die Gaszufuhr- und Detektoreinrichtungen ergeben. Des Weiteren kann die Leckprüfvorrichtung für spezielle Anwendungen optimal ausgelegt werden.

Gemäß einer Ausführungsform der Erfindung ist das Gehäuse der erfindungsgemäß verwendeten Spüleinrichtung temperierbar. Vorteilhafterweise ermöglicht dies die Leckprüfung bei verschiedenen Betriebstemperaturen des Bauteils. Besonders bevorzugt ist das Gehäuse aktiv gekühlt oder thermisch mit einer Kühlrichtung verbunden, um die Temperatur des Gehäuses auf eine reduzierte Temperatur von z. B. der Temperatur des flüssigen Stickstoffs abzusenken.

Die Gaszufuhreinrichtung der Leckprüfvorrichtung ist gemäß einer weiteren Variante der Erfindung optional mit einer Strömungseinheit ausgestattet, die in dem Gehäuse angeordnet ist. Mit der Strömungseinheit wird gasförmiges Spülgas, z. B. gasförmiger Stickstoff in den Gasraum der Spüleinrichtung eingeführt. Diese Ausführungsform der Erfindung ist vorzugsweise mit einem kühlbaren Gehäuse der Spüleinrichtung vorgesehen. Vorteilhafterweise wird eine Erwärmung des Spülgases und des zu prüfenden Bauteils der Vakuumeinrichtung durch einen Einfluss des gekühlten Gehäuses vermieden.

Gemäß einer weiteren Ausführungsform der Erfindung ist die Strömungseinheit an einer Wand des Gehäuses beweglich angeordnet. Dies ermöglicht vorteilhafterweise die Verstellung der Position der Strömungseinheit relativ zu dem getesteten Bauteil. Die Variation der Spülgaszuführung auf verschiedene Oberflächenbereiche des Bauteils ergibt eine erhöhte Empfindlichkeit der Leckprüfung.

Wenn das Gehäuse der Spüleinrichtung eine Zylinderform aufweist, ist die Strömungseinheit vorzugsweise in der Wand des Gehäuses um das zu prüfende Bauteil drehbar. Diese Variante hat besondere Vorteile für die Prüfung von rohrförmigen Bauteilen, wie z. B. von Rohrschweißnähten. Für den automatisierten Betrieb der Leckprüfvorrichtung ist die Spüleinrichtung vorzugsweise mit einer Antriebseinrichtung ausgestattet, mit der die Strömungseinheit beweglich ist.

Die erfindungsgemäße Leckprüftechnik hat die folgenden weiteren Vorteile. Die Nachweisgrenzen liegen unterhalb von $10^{-10}$ Pa $m^3$/s und damit deutlich unterhalb der herkömmlichen Helium-Schnüffelprüfung ($10^{-9}$ Pa $m^3$/s). Es kann eine im Vergleich zur Helium-Schnüffelprüfung oder Überdruckmethode wesentlich schnellere Prüfung von Prüflingen erreicht werden. Bei der herkömmlichen Schnüffelprüfung ist die Lokalisation von kleinen Leckagen sehr zeitintensiv und sehr unpraktikabel. Bei der Überdruckmethode dauert die Messung oftmals bis zu 24 Stunden. Bei der erfindungsgemäßen Leckprüftechnik beträgt die Messzeit ca. 30 Minuten. Durch die wesentlich kürzeren Messzeiten kann die Messsicherheit wesentlich verbessert werden. Die Messung kann ebenfalls zur Verifizierung wiederholt werden.

Des Weiteren wird eine Reduzierung von atmosphärischen Störungen erreicht. Bei der Lecksuche nach der Schnüfflermethode oder Überdruckmethode können atmosphärisch Störungen das Messergebnis verfälschen oder stören. Häufig kommt es bei der Lecksuche durch Undichtigkeiten in der Heliumversorgung zu einem Anstieg des atmosphärischen He-Untergrundes. Bei der erfindungsgemäßen Leckprüftechnik wird durch die Schutzgasatmosphäre verhindert, dass die Messung durch einen Anstieg des atmosphärischen He-Untergrundes verfälscht oder gestört wird.

Die erfindungsgemäße Leckprüftechnik erlaubt auch eine wesentlich vereinfachte lokale Lecksuche. Bei einer flexibeln Hülle kann eine Schnüffelsonde innerhalb der Hülle bewegt werden. Dies erlaubt es, selbst kleinste Leckagen sehr schnell punktgenau zu lokalisieren.

Weitere Einzelheiten und Vorteile werden im Folgenden unter Bezug auf die beigefügten Zeichnungen beschrieben. Es zeigen:

Figur 1: eine erste Ausführungsform einer Leckprüfvorrich- tung gemäß der Erfindung;

Figur 2: eine weitere Ausführungsform einer Leckprüfvor- richtung gemäß der Erfindung;

Figur 3: Einzelheiten einer erfindungsgemäß vorgesehenen Teilereinrichtung;

Figuren 4 bis 14: weitere Ausführungsformen einer Leckprüf- vorrichtung gemäß der Erfindung;

Figur 15: eine Ausführungsform der Leckprüfvorrichtung ge- mäß der Erfindung mit einem kühlbaren Gehäuse;

Figur 16: eine Ausführungsform der Leckprüfvorrichtung ge- mäß der Erfindung mit einer beweglichen Strömungseinheit; und

Figur 17: eine herkömmliche Vorrichtung zur Leckprüfung ge- mäß der Spülgasmethode.

Die Erfindung wird im Folgenden unter beispielhaftem Bezug auf die Leckprüfung an einer Vakuumeinrichtung beschrieben. Es wird betont, dass die Umsetzung der Erfindung nicht auf die Leckprüfung an Vakuumeinrichtungen beschränkt, sondern entsprechend mit anderen technischen Einrichtungen, die auf Gasdichtheit zu prüfen sind, möglich ist. Einzelheiten einer erfindungsgemäßen Leckprüfvorrichtung werden im Folgenden insbesondere unter Bezug auf die Realisierung der Einstellung des Systemstroms des Spülgases beschrieben. Weitere Einzelheiten, die bspw. die massenspektrometrische Schnüffelprüfung oder Bauteile der Strömungstechnik betreffen, sind an sich bekannt und werden daher hier nicht weiter erläutert.

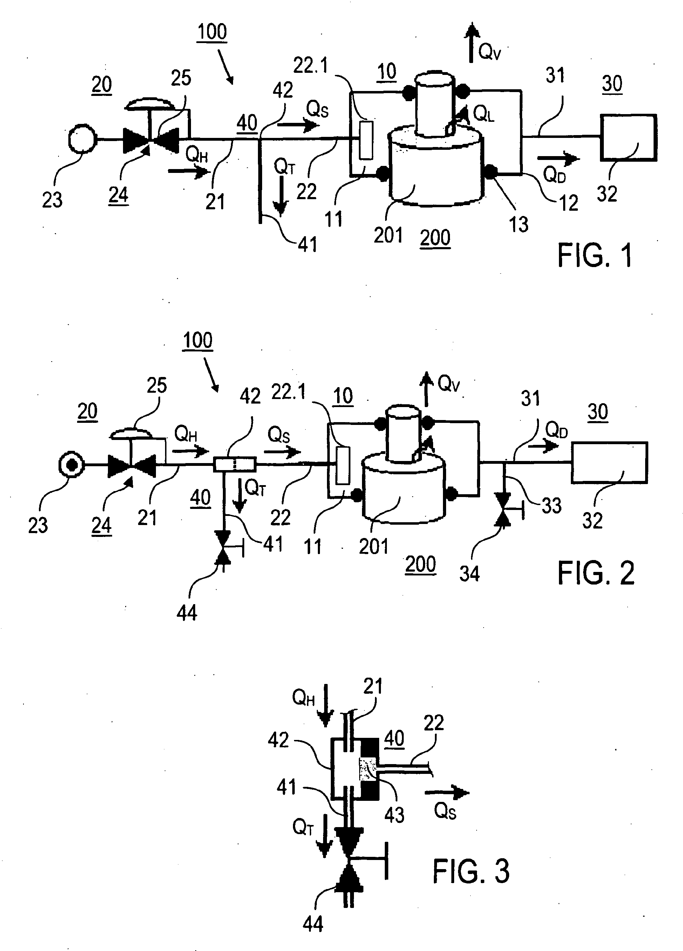

Figur 1 zeigt mit einem schematischen Strömungsdiagramm eine erste Ausführungsform der erfindungsgemäßen Leckprüfvorrichtung 100 zur Leckprüfung an einer Vakuumeinrichtung 200. Die Leckprüfvorrichtung 100 umfasst eine Spüleinrichtung 10, eine Gaszufuhreinrichtung 20 und eine Detektoreinrichtung 30. Die Spüleinrichtung 10 ist optional ein gesondertes Bauteil, das mit der Leckprüfvorrichtung 100 kombiniert wird.

Die Spüleinrichtung 10 bildet einen abgeschlossenen Spülraum 11 um das zu prüfende Bauteil 201 der Vakuumeinrichtung 200. Der Spülraum 11 wird durch eine Hülle 12 eingeschlossen, die mit einer Dichtung 13 auf der Oberfläche des zu prüfenden Bauteils 201 befestigt ist. Die Hülle 12 kann eine starre Wand, z. B. aus Kunststoff umfassen, so dass die Spüleinrichtung 10 ein festes Gehäuse bildet. Alternativ kann die Hülle 12 flexibel sein und z. B. aus einer Kunststoff-Folie bestehen. Im diesem Fall kann die Spüleinrichtung 10 mit größerer Flexibilität an verschiedenen Bauteilformen angepasst werden. Die Dichtung 13 umfasst z. B. ein zwischen der Hülle 12 und der Oberfläche des Bauteils 201 angeordnetes, elastisches Material (z. B. Gummi oder Klebstoff- oder Füllstoff-Kitt) und/oder mindestens einen Klebestreifen, mit dem die Hülle 12 auf der Oberfläche des Bauteils 201 befestigt ist.

Die Spüleinrichtung 10 weist Leitungsverbinder auf, an denen Leitungen zum Anschluss der Gaszufuhreinrichtung 20 und der Detektoreinrichtung 30 ankoppelbar sind. Ein Leitungsverbinder (in Figur 1 nicht dargestellt) umfasst im einfachsten Fall ein Loch in der Hülle 12, in das die entsprechende Leitung eingesetzt wird, oder eine Kopplungsbuchse zur Aufnahme und Fixierung der Leitung. Typischerweise sind die Leitungen an den Leitungsverbindern lösbar befestigt. Für bestimmte Anwendungen kann es jedoch von Vorteil sein, wenn die Leitungen fest mit der Hülle verbunden sind. Die Hülle und die angrenzenden Leitungen können insbesondere aus dem gleichen Material hergestellt und einstückig gebildet sein.

Die Gaszufuhreinrichtung 20 enthält eine Hauptstromleitung 21, eine Systemstromleitung 22 und eine Teilstromleitung 41. Die Hauptstromleitung 21 führt von einer Spülgasquelle 23 über eine Hauptstrom-Stelleinrichtung 24 mit einem Dosierventil 25 zu der erfindungsgemäß verwendeten Teilereinrichtung 40. An der Teilereinrichtung 40 verzweigt die Hauptstromleitung 21 in die Systemstromleitung 22 und die Teilstromleitung 41. Die Systemstromleitung 22 führt von der Teilereinrichtung 40 zu der Spüleinrichtung.10. Am Ende der Systemstromleitung 22 ist eine Strömungseinheit 22.1 angeordnet, durch die in den Spülraum 11 Spülgas zugeführt wird.

Vorteilhafterweise kann die Länge der Systemstromleitung 22 in Abhängigkeit von der konkreten Anwendung in einem breiten Bereich gewählt werden. Wegen der automatischen-Zuführung des Systemstroms $Q_S$ in Abhängigkeit vom Druck in der Spüleinrichtung 10 kann die Länge mehr als 5 m oder sogar mehr als 10 m, z. B. 12 m betragen. Entsprechend kann die Gaszufuhreinrichtung bei der Leckprüfung an großen, komplexen Anlagen ortsfest angeordnet und flexibel mit der Hülle 12 an der jeweils aktuellen Prüfposition verbunden werden. Hierzu umfasst die Systemstromleitung 22 oder Detektorstromleitung 31 vorzugsweise einen flexiblen Schlauch. Der Schlauch der Systemstromleitung 22 besteht z. B. aus Kunststoff mit einem Innendurchmesser von 4 mm. Die Detektorstromleitung 31 umfasst typischerweise eine Schnüffelsonde mit einem flexiblen Schlauch.

Die Teilereinrichtung 40 enthält zur Abzweigung der Teilstromleitung 41 bei der in Figur 1 gezeigten Ausführungsform der Erfindung eine T-Stück 42, dessen Zweige durch die Haupt-, System- und Teilstromleitungen 21, 22 und 41 gebildet werden. In Bezug auf die gegenseitige Orientierung der Leitungen am T-Stück 42 bestehen keine Beschränkungen. Es ist insbesondere möglich, dass eine der System- und Teilstromleitungen 22, 41 als Fortsetzung der Hauptstromleitung 21 ausgerichtet ist (siehe Figuren 1, 3).

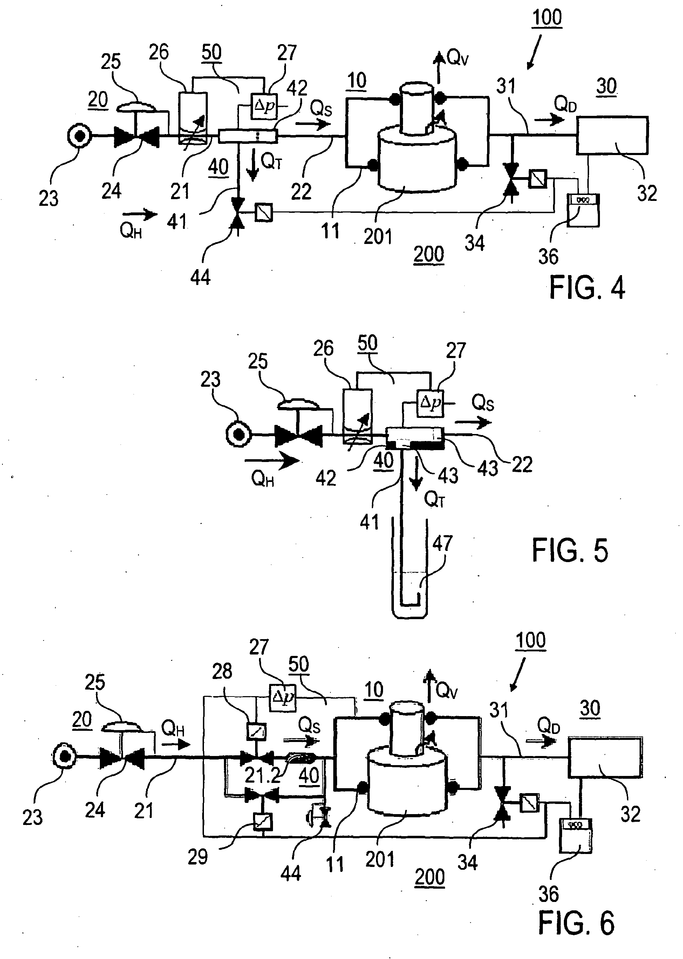

Die Teilstromleitung 41 führt vom T-Stück 42 zu einem Ende, das in eine Umgebung mit atmosphärischer Umgebung oder in ein großvolumiges Regenerationsgefäß mündet. Das Ende der Teilstromleitung 41 kann ein freies Leitungsende sein oder einen Verschluss aufweisen, mit dem eine Rückdiffusion von Umgebungsgas in die Teilereinrichtung verhindert wird (siehe Figur 5).

Die Detektoreinrichtung 30 umfasst eine Detektorleitung 31, die von der Spüleinrichtung 10 zu einem Detektor 32 führt. Die Detektorleitung 31 endet im Spülraum 11 mit einem freien Leitungsende oder einer Schnüffelsonde (nicht dargestellt). Der Detektor 32 dient dem Nachweis eines vom Inneren des Bauteils 201 in den Spülraum 11 ggf. austretenden Leckgases (Testgases). Hierzu wird ein aus der Leckprüfung an sich bekannter Detektor, wie z. B. ein Helium-Detektor mit Drehschieberpumpe verwendet.

Die Leckprüfvorrichtung 100 wird von den folgenden Volumen strömen des Spülgases durchströmt. Ein Hauptstrom $Q_H$ wird mit der Spülgasquelle 23 erzeugt. Die Spülgasquelle 23 ist eine Druckgasquelle. Das Spülgas (z. B. Stickstoff) wird aus einer Spülgasquelle 23 mit einem Arbeitsdruck von z. B. 0,5 bar eingespeist. Der Volumenstromwert des Hauptstroms $Q_H$ wird mit dem Dosierventil 25 eingestellt, das mit einem Differenzdruckmanometer ausgestattet ist. An dem T-Stück 42 teilt sich der Hauptstrom $Q_H$ in den Systemstrom $Q_S$ und den Teilstrom $Q_T$. Der Teilstrom $Q_T$ strömt durch die Teilstromleitung 41 in die Umgebung ab. Der Teilstrom $Q_T$ wird u. a. durch den Strömungswiderstand in der Teilstromleitung 41 beeinflusst. Entsprechend ergibt sich durch eine Auswahl eines bestimmten Innendurchmessers und/oder einer bestimmten Länge der Teilstromleitung 41 eine Möglichkeit zur Einstellung des Teilstroms $Q_T$. Der Systemstrom $Q_S$ strömt durch die Systemstromleitung 22 in die Spüleinrichtung 10. In der Spüleinrichtung 10 wird der Systemstrom des Spülgases durch einen ggf. aus dem Bauteil 201 austretenden Leckgasstrom $Q_L$ vergrößert und durch einen Verluststrom $Q_V$ z. B. durch Undichtheiten der Hülle 12 vermindert. Das zur Detektoreinrichtung 30 austretende Spülgas mit dem ggf. enthaltenen Leckgas bildet den Detektorstrom $Q_D$.

Die erfindungsgemäße Leckprüfung umfasst die folgenden Schritte. Zunächst wird die Spüleinrichtung 10 an dem zu prüfenden Bauteil 201 angebracht. Die Gaszufuhreinrichtung 20 und die Detektoreinrichtung 30 werden mit der Spüleinrichtung 10 verbunden. Anschließend beginnt der Betrieb der Gaszufuhreinrichtung 20. Es wird ein vorbestimmter Hauptstrom $Q_H$ eingestellt, der sich in den Teilstrom $Q_T$ und den Systemstrom $Q_S$ teilt.

Bei.der Teilung wird der Druck der Leckprüfvorrichtung 100 im Bereich von 1 bis 10 mbar oberhalb der atmosphärischen Umgebung eingestellt. Der von der Detektoreinrichtung 30 aus der Leckprüfung angesaugte Detektorstrom $Q_D$ wird in der Teilereinrichtung über den Systemstrom $Q_S$ stetig nachgeführt, während der übrige Volumenstrom des Hauptstromes $Q_H$ als Teilstrom $Q_T$ in die Umgebung strömt. In diesem Zustand erfolgt die Detektion des Leckgases $Q_L$ im Detektorstrom $Q_D$ der Detektoreinrichtung.

Wenn durch Schwankungen beim Betrieb der Detektoreinrichtung oder durch Verlustströme $Q_V$ der Druck im Spülraum 11 abfällt oder ansteigt, erfolgt automatisch eine Anpassung des Systemstroms $Q_S$. Bei Druckabfall im Spülraum 11 steigt der Systemstrom $Q_S$, während bei Druckanstieg im Spülraum 11 umgekehrt der Systemstrom $Q_S$ vermindert wird. Die Volumenbilanz innerhalb der Hülle 12 ist konstant. Die Detektion des Leckgases im Detektor 32 und die weitere Auswertung von Messergebnissen erfolgt in an sich bekannter Weise.

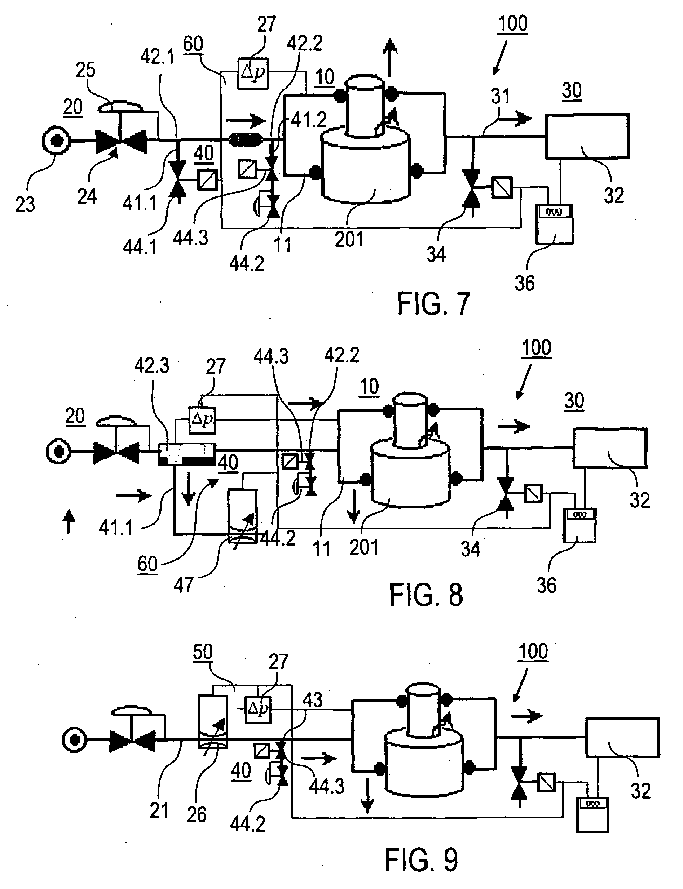

Figur 2 zeigt eine weitere Ausführungsform der erfindungsgemäßen Leckprüfvorrichtung 100, deren Komponenten, soweit sie mit Figur 1 übereinstimmen, mit den gleichen Bezugszeichen versehen sind. Ein erster Unterschied gegenüber der oben beschriebenen Ausführungsform besteht in der Bereitstellung einer Teilstrom-Stelleinrichtung 44 in der Teilstromleitung 41. Die Teilstrom-Stelleinrichtung 44 umfasst ein manuell betätigtes Dosierventil. Alternativ kann die Teilstrom-Stelleinrichtung 44 ein geregeltes Dosierventil aufweisen, das mit einem Differenzdruckmanometer einstellbar ist (siehe Figur 7). Ein weiterer Unterschied gegenüber der oben beschriebenen Ausführungsform besteht in der Abzweigung einer Spülleitung 33 von der Detektorleitung 31. Die Spülleitung 33 enthält eine Spülstrom-Stelleinrichtung 34, die z. B. ein manuell betätigtes Dosierventil umfasst, alternativ kann ein magnetisch betätigtes Dosierventil vorgesehen sein (siehe Figur 7). Schließlich weist die Leckprüfvorrichtung 100 gemäß Figur 3 anstelle des T-Stücks eine Teilstromkammer 42 auf, die mit weiteren Einzelheiten in Figur 3 gezeigt ist.

Die Teilstrom-Stelleinrichtung 44 bietet die folgenden Vorteile. Erstens wird die Einstellung eines vorbestimmten Strömungswiderstandes in der Teilstromleitung 41 und dadurch die Einstellung eines bestimmten Druckes in der Spüleinrichtung 10 im Teilerverhältnis zwischen den System- und Teilströmen $Q_S$, $Q_T$ ermöglicht. Des Weiteren ermöglicht die Teilstrom-Stelleinrichtung 44 gemeinsam mit der Spülstrom-Stelleinrichtung 34 eine Spülung der Spüleinrichtung 10 bei einem Vorbereitungsschritt vor der Lecksuche. Bei dem Vorbereitungsschritt wird die Spüleinrichtung 10 zunächst mit Spülgas gespült. Hierzu wird der Teilstrom-Stelleinrichtung 44 geschlossen und die Spülstrom-Stelleinrichtung 34 geöffnet, so dass der gesamte Hauptstrom $Q_H$ durch die Spüleinrichtung 10 fließt. Durch diese Spülung kann der Leckgas-Systemuntergrund in der Spüleinrichtung 10 in Abhängigkeit von der Lecksuchaufgabe von $5 \cdot 10^{-7}$ auf bis zu $10^{-12}$ Pa m$^3$ /s reduziert werden. Anschließend wird die Spülstrom-Stelleinrichtung geschlossen und die Teilstrom-Stelleinrichtung 44 geöffnet. In diesem Zustand folgt die Leckgasprüfung, wobei der vom Detektor 32 abgesaugte Detektorstrom $Q_D$ vom Systemstrom $Q_S$ stetig nachgeführt wird.

Des Weiteren kann an die Spülstrom-Stelleinrichtung 34 bei der Spülung einer flexiblen Hülle zur Reduzierung der Spülgasmenge eine Vakuumpumpe angeschlossen werden (nicht dargestellt). Hierzu werden das Dosierventil 25 und die Teilstrom-Stelleinrichtung 44 geschlossen und über die Spülstrom-Stelleinrichtung 34 die flexible Hülle mit der Vakuumpumpe abgepumpt. Durch das Schließen der Spülstrom-Stelleinrichtung 34 und dem Öffnen des Dosierventils 25 wird in die abgepumpte Hülle Spülgas bis zum Erreichen eines Überdruckes zur atmosphärischen Umgebung eingeleitet.

Abweichend von dem in Figur 2 gezeigten Schema kann in der Hauptstromleitung 21 zwischen der Hauptstrom-Stelleinrichtung 24 und der Teilereinrichtung 40 ein manuell oder magnetisch betätigbares Dosierventil vorgesehen sein, das der Einstellung des Hauptstroms $Q_H$ dient (siehe z. B. Figuren 4, 6 und 9). Gemäß einer weiteren Variante ist als Teilstrom-Stelleinrichtung 44 eine Kombination aus einem Dosierventil 41.1 und einem parallel geschalteten Überströmventil 44.2 (Figur 7). Diese Schaltkombination verhindert insbesondere bei einer Lecksuche unter Tieftemperaturbedingungen, dass sich innerhalb der Spülvorrichtung 10 ein zu hoher Druck bei geschlossenem Dosierventil 41.1 aufbaut. Mit der Teilstrom-Stelleinrichtung 44 wird ein Druck in der Leckprüfungsvorrichtung 100 derart eingestellt, dass im System, insbesondere im Spülraum 11, ein höherer Druck als in der atmosphärischen Umgebung gegeben ist.

Bei der in Figur 2 gezeigten Ausführungsform der Erfindung umfasst die Teileinrichtung 40 eine Teilstromkammer 42, die mit weiteren Einzelheiten in Figur 3 illustriert ist. Die Teilstromkammer 42 weist drei Anschlüsse auf. Mit dem ersten Anschluss ist die Hauptstromleitung 21 verbunden, durch die der Hauptstrom $Q_H$ in die Teilstromkammer 42 eingeführt wird. Mit den übrigen Anschlüssen sind die Systemstromleitung 22 und die Teilerleitung 41 verbunden, durch die der Systemstrom $Q_S$ und der Teilstrom $Q_T$ vom Hauptstrom $Q_H$ abzweigen. Das Innenvolumen der Teilstromkammer 42 beträgt z. B. 10 cm$^3$. In der Teilstromkammer 42 ist ein Druckreduzierer 43 eingesetzt, der durch einen Porösfiltereinsatz oder eine Drosselblende gebildet wird und der schwingungsfreien Einstellung des Systemstroms $Q_S$ dient. Der Systemstrom $Q_S$ wird stetig schwingungsfrei aus dem Hauptstrom $Q_H$ zugeführt. Die Teilstromkammer 42 ermöglicht vorteilhafterweise eine Entkopplung des Systemstroms $Q_S$ von der Spülgasversorgung.

Figur 4 zeigt eine weitere Ausführungsform der erfindungsgemäßen Leckprüfvorrichtung 100, deren Komponenten, soweit sie mit den oben beschriebenen Varianten übereinstimmen, die gleichen Bezugszeichen tragen. Im Vergleich zur Ausführungsform gemäß Figur 2 bestehen im Wesentlichen die folgenden Unterschiede. Erstens ist eine Spül-Steuereinrichtung 36 vorgesehen, mit der die Teilstrom- und Spülstrom-Stelleinrichtungen 44, 34 steuerbar sind. Die Stelleinrichtungen 44, 34 umfassen magnetisch betätigbare Dosierventile in Kombination mit magnetischen Schaltern (Magnetventile). Mit der Spül-Steuereinrichtung 36 ist der oben beschriebene Vorbereitungsschritt zur Spülung der Spüleinrichtung 10 automatisierbar.

Eine weitere Besonderheit der Ausführungsform gemäß Figur 4 besteht darin, dass die Hauptstrom-Stelleinrichtung 24 zusätzlich ein Durchfluss-Stellelement 26 aufweist, das in Abhängigkeit vom Druck in der Teilstromkammer 42 betätigbar ist. Mit einem Differenzdrucksensor 27 wird der Druckunterschied zwischen der Teilstromkammer 42 und der atmosphärischen Umgebung erfasst und in ein Stellsignal umgewandelt. Mit den Komponenten 26 und 27 wird der erste Regelkreis 50 gebildet, mit dem der Hauptstrom $Q_H$ so regelbar ist, dass innerhalb der Teilstromkammer 42 ein konstanter Differenzdruck in Bezug auf den atmosphärischen Druck gegeben ist. Wenn der Differenzdruck sinkt, so wird das Durchfluss-Stellelement 26 weiter geöffnet und damit der Hauptstrom $Q_H$ erhöht. Der erste Regelkreis 50 bewirkt, dass der eingestellte Differenzdruck in der Teilstromkammer 42 und mit diesem auch der Systemdruck in der Spüleinrichtung 10 konstant bleibt.

Weitere Einzelheiten des ersten Regelkreises 50 sind in Figur 5 gezeigt. Die Teilstromkammer 42 ist ähnlich wie in Figur 3 mit einem Innenraum und drei Anschlüssen aufgebaut. An den Abzweigungen der Systemstromleitung 22 und der Teilstromleitung 41 sind zur Druckreduzierung und Schwingungsentkopplung Porösfiltereinsätze 43 (oder Drosselblenden) angeordnet.

Der erste Regelkreis 50 ermöglicht eine verbesserte Entkopplung des Systemstroms $Q_S$ von der Spülgasversorgung. Mit dem geregelten Hauptstrom $Q_H$ kann der von der Detektoreinrichtung 30 abgesaugte Detektorstrom über den Systemstrom $Q_S$ stetig und schwingungsfrei nachgeführt werden. Die Bedingung $p_{system} \geq p_{atm}$ wird mit der Teilereinrichtung 40 automatisch eingestellt. Bei einem Absinken des Druckes in der Teilstromkammer 42 wird der Hauptstrom

$Q_H$ erhöht. Der Differenzdruck zwischen der Teilstromkammer 42 und der atmosphärischen Umgebung bleibt über die gesamte Messzeit stabil. Eine manuelle Einstellung der Gaszufuhr ist nicht erforderlich, so dass sich Vorteile für den automatisierten Betrieb der Leckprüfung ergeben.

Wenn durch Verlustströme aus der Hülle 12 Instabilitäten auftreten, werden diese mit der Teilereinrichtung 40 durch eine Vergrößerung des Systemstroms $Q_S$ kompensiert. Entsprechendes gilt für Störungen des Drucks in der Spüleinrichtung 10 infolge von Volumenschwankungen der Hülle 12. Das bei einer Volumenverkleinerung überschüssige Hüllengas kann über die Teilereinrichtung 40 in die Atmosphäre abströmen. Die Ursache von Volumenschwankungen können z. B. Luftbewegungen oder Temperaturänderungen sein.

Figur 5 illustriert des Weiteren einen Verschluss 47 des Endes der Teilstromleitung 41. Wenn der Teilstrom $Q_T$ zu stark absinken würde, könnte Umgebungsluft und mit dieser atmosphärisches Helium über die Teilereinrichtung 40 in die Leckprüfvorrichtung einströmen. Da Helium typischerweise als Leck- oder Prüfgas verwendet wird, könnte dadurch das Ergebnis der Leckprüfung verfälscht werden. Wenn an die Nachweisgrenze der Leckprüfung extrem hohe Anforderungen gestellt werden, kann mit dem Verschluss 47 ein Einströmen der Umgebungsluft vermieden werden.

Bei der illustrierten Ausführungsform der Erfindung ist der Verschluss 47 mit einer Flüssigkeitsbarriere ausgestattet. Das freie Ende der Teilstromleitung 41 ist in die Flüssigkeitsbarriere, z. B. aus Wasser eingetaucht. Wenn Überdruck in der Teilstromkammer 42 herrscht, könnte der Teilstrom $Q_T$ durch die Flüssigkeitsbarriere nach außen aufsteigen. Wenn der Teilstrom $Q_T$ jedoch auf Null abnimmt, kann keine Luft durch die Teilstromleitung 41 eindiffundieren. Der illustrierte Verschluss 47 hat den Vorteil, dass die richtige Einstellung des Betriebszustandes der Leckprüfvorrichtung 100 am Verschluss 47 leicht beobachtet werden kann. So lange am Verschluss 47 durch die Flüssigkeitsbarriere Blasen aufsteigen, ist der Teilstrom $Q_T$ vorhanden und zur automatischen Nachführung des Systemstroms $Q_S$ ausreichend. Alternativ zu der Variante mit der Flüssigkeitsbarriere kann der Verschluss 47 mit einer mechanischen Barriere ausgestattet sein. In diesem Fall ist das Ende der Teilstromleitung 41 mit einem vertikal ausgerichteten Steigrohr (nicht dargestellt) verbunden. Entlang der Länge des Steigrohres sind Bohrungen vorgesehen. Das freie Ende der Teilstromleitung 41 ist mit einer Kugel im Steigrohr verschlossen. Wenn die Kugel mit dem Teilstrom $Q_T$ angeströmt wird, kann die Kugel angehoben werden, so dass der Teilstrom über die Bohrungen im Steigrohr zur Atmosphäre abströmt. Sinkt der Druck im System ab, so fällt die Kugel nach unten, so dass das Ende der Teilstromleitung 41 verschlossen ist und ein Eindringen von Umgebungsluft in das System verhindert wird.

Bei der in Figur 6 gezeigten Ausführungsform der Erfindung sind im Vergleich zu der Variante gemäß Figur 4 die folgenden Modifizierungen vorgesehen. Erstens enthält die Hauptstrom-Stelleinrichtung 24 ein Magnetventil 28, mit dem der Hauptstrom $Q_H$ durch Taktung einstellbar ist. Diese Einstellung erfolgt im ersten Regelkreis 50 in Abhängigkeit vom Druck im Spülraum 11 der Spüleinrichtung 10. Mit dem Differenzdrucksensor 27 wird der Druckunterschied im Spülraum 11 gegenüber der atmosphärischen Umgebung erfasst und entsprechend das Magnetventil 28 getaktet angesteuert. Es ermöglicht eine Volumeneinstellung in Abhängigkeit vom Druck in der Spüleinrichtung 10.

Ein weiteres besonderes Merkmal der Ausführungsform gemäß Figur 6 ist die Bereitstellung eines Bypass-Magnetventils 29, das zur Spülung der Spüleinrichtung 10 vor der Leckprüfung ansteuerbar ist. Im Unterschied zur Variante gemäß Figur 4 wird das Bypass-Magnetventil 29 gemeinsam mit der Spülstrom-Stelleinrichtung 34 von der Spül-Steuereinrichtung 36 angesteuert.. Alternativ kann der in Figur 6 gezeigte erste Regelkreis 50 mit einer magnetisch betätigten Teilstrom-stelleinrichtung 44 gemäß Figur 4 kombiniert sein.

Da mit dem ersten Regelkreis 50 gemäß Figur 6 das Magnetventil 28 in Abhängigkeit vom Druck im Spülraum 11 betätigt wird, kann die Teilstromkammer durch ein einfaches T-Stück 42 ersetzt werden. An diesem zweigt die Teilstromleitung 41 von der Hauptstromleitung 21 ab. In der Teilstromleitung 41 ist als Teilstrom-Stelleinrichtung 44 ein Dosierventil mit Differenzdruckregler vorgesehen.

Figur 6 illustriert des Weiteren einen Schalldruckdämpfer 21.2, der in der Hauptstromleitung 21 angeordnet ist und der Reduzierung von Systemschwingungen durch den getakteten Betrieb der Magnetventile dient. Der Schalldruckdämpfer 21.2 kann auch bei den anderen hier beschriebenen Ausführungsformen ohne oder mit Magnetventilen vorgesehen sein.

Zur Leckprüfung erfolgt bei der Ausführungsform gemäß Figur 6 zunächst der o. g. Vorbereitungsschritt. Bei diesem werden das Magnetventil 28 und das Bypass-Magnetventil 29 und die Spülstrom-Spüleinrichtung 34 geöffnet, um Spülgas durch die Spüleinrichtung 10 hindurchzuleiten. Anschließend wird das Bypass-Magnetventil 29 geschlossen und die Leckgasdetektion mit dem Detektor 32 durchgeführt. Dabei wird der Hauptstrom $Q_H$ in Abhängigkeit vom Druck durch das Magnetventil 28 in dem Spülraum 11 getaktet geregelt.

Figur 7 zeigt eine weitere Ausführungsform der Erfindung, bei der die Teilereinrichtung 40 zwei T-Stücke 42.1, 42.2 umfasst, an denen zwei Teilstromleitungen 41.1, 41.2 von der Hauptstromleitung 21 bzw. der Systemstromleitung 22 abzweigen. Die Teilstrom-Stelleinrichtung umfasst Teilstromleitungen 41.1 ein Magnetventil 44.1 und in der Teilstromleitungen 41.2 ein Dosierventil mit Differenzdruckmanometer 44.2 und ein weiteres Magnetventil 44.3. Das Magnetventil 44.1 ist in Abhängigkeit vom Druck in der Spüleinrichtung 10 einstellbar. Hierzu ist der Differenzdrucksensor 27 vorgesehen, mit dem ein Druckunterschied zwischen dem Innendruck in dem Spülraum 11 und dem atmosphärischen Umgebungsdruck erfasst und ein entsprechendes Stellsignal an das Magnetventil 44.1 gegeben wird. Mit den Komponenten 44.1 und 27 wird der zweite Regelkreis 60 gebildet, welcher der automatischen Einstellung des Strömungswiderstandes in der ersten Teilstromleitung 41.1 und damit der Einstellung des Teilstroms $Q_T$ durch die erste Teilstromleitung 41.1 dient. Die zweite Teilstromleitung 42.2 dient einer Überstromregelung. Das Dosierventil 44.2 wird mit dem Differenzdruckmanometer nur geöffnet, wenn ein vorbestimmter Überdruck in der zweiten Teilstromleitung 42.2 erreicht wird. Der Grenzdruck beträgt z. B. 10 mbar. Wenn der Grenzdruck nicht überschritten wird, bleibt das Dosierventil 44.2 geschlossen. Besonders bei der Lecksuche im Kalten kann der Grenzdruck sehr schnell erreicht werden.

Zur Leckprüfung wird bei dem genannten Vorbereitungsschritt mit der Spülsteuereinrichtung 36 die Magnetventile 44.1 und 44.3 geschlossen, so dass der genannte Hauptstrom $Q_H$ in die Spüleinrichtung 10 fließt. Gleichzeitig wird die Spülstrom-Stell-Einrichtung 34 geöffnet, so dass das aus dem Spülraum 11 austretende Spülgas an dem Detektor 32 vorbei in die atmosphärische Umgebung abgeleitet wird. Anschließend werden das Magnetventil 44.1 geöffnet und die Spülstrom-Stelleinrichtung 34 geschlossen, um die Leckprüfung durchzuführen.

Figur 8 zeigt eine abgewandelte Variante der Ausführungsform gemäß Figur 7, bei der das erste T-Stück 42.1 durch eine Teilstromkammer 42.3 ersetzt ist. Von der Teilstromkammer 42.3 zweigt die erste Teilstromleitung 41.1 ab, in der ein Durchfluss-Stellelement 47 angeordnet ist.

Ein Differenzdrucksensor 27 ist zur Messung eines Differenzdrucks zwischen dem Innenraum der Teilstromkammer 42.3 und dem Spülraum 11 der Spüleinrichtung 10 vorgesehen. In Abhängigkeit vom gemessenen Differenzdruck wird ein Stellsignal zur Betätigung des Durchfluss-Stellelements 47 erzeugt. Mit den Komponenten 47 und 27 wird der zweite Regelkreis 60 zur Regelung des Teilstroms $Q_T$ gebildet.

Gemäß einer weiteren, in Figur 9 gezeigten Ausführungsform der erfindungsgemäßen Leckprüfvorrichtung 100 wird der erste Regelkreis 50 mit dem Differenzdrucksensor 27 und dem Durchfluss-Stellelement 26 in der Hauptstromleitung 21 gebildet. Die Regelung des Durchfluss-Stellelements 26 erfolgt in Abhängigkeit von dem Druck im Spülraum der Spüleinrichtung. In diesem Fall kann im Unterschied zu der Variante gemäß den Figuren 4 und 5 die Teilstromkammer durch ein T-Stück 42.3 ersetzt werden.

Des Weiteren besitzt diese Schaltung wie die Ausführungsform nach Figur 7 ein Magnetventil 44.3 und ein Dosierventil 44.2. Wird ein vorbestimmter Grenzdruck überschritten, öffnet das Dosierventil 44.2, so dass ein kontrolliertes Abströmen von überschüssigem Spülgas ermöglicht wird.

Die Leckprüfung mit der Spülgasmethode erlaubt in Abhängigkeit von Betriebs- und Auswertungsmethode eine Bestimmung der Leckrate nach der dynamischen oder statischen Spülgasmethode. Bei der dynamischen Spülgasmethode wird stetig von der Detektoreinrichtung 30 in die Spüleinrichtung 10 Spülgas zugeführt.

Für die dynamische Spülgasmethode gilt bei der Berechnung der Leckrate mit der Verwendung einer hermetisch geschlossenen Hülle 12 die folgende Bilanz.

$$\frac{d(pV)_{Spüleinrichtung}}{dt} = q_{pV} + p_{Zu} * \overset{*}{V}_{Zu} - p_{Spüleinrichtung} * S_{eff}$$

wobei p: Druck im Spülraum 11, V: Volumen des Spülraums 11, t: Zeit, q: Leckrate des zu prüfenden Bauteils, $p_{zu}$: Druck von $Q_S$, $V_{zu}$: Volumenstrom $Q_S$ und $S_{eff}$: Saugvermögen des Detektors bedeuten.

Bei der statischen Spülgasmethode wird nach einer Spülung die Spüleinrichtung für eine bestimmte Wartezeit geschlossen und dann das Leckgas im Detektorstrom detektiert. Für die statische Spülgasmethode gilt die folgende Bilanz:

$$q_{pV} = \frac{V_{Spüleinrichtung} * \Delta p_{Testgas}}{\Delta t}$$

wobei V: Volumen der Spüleinrichtung, $\Delta$p: Partialdruck Testgas und q: Leckrate bedeuten.

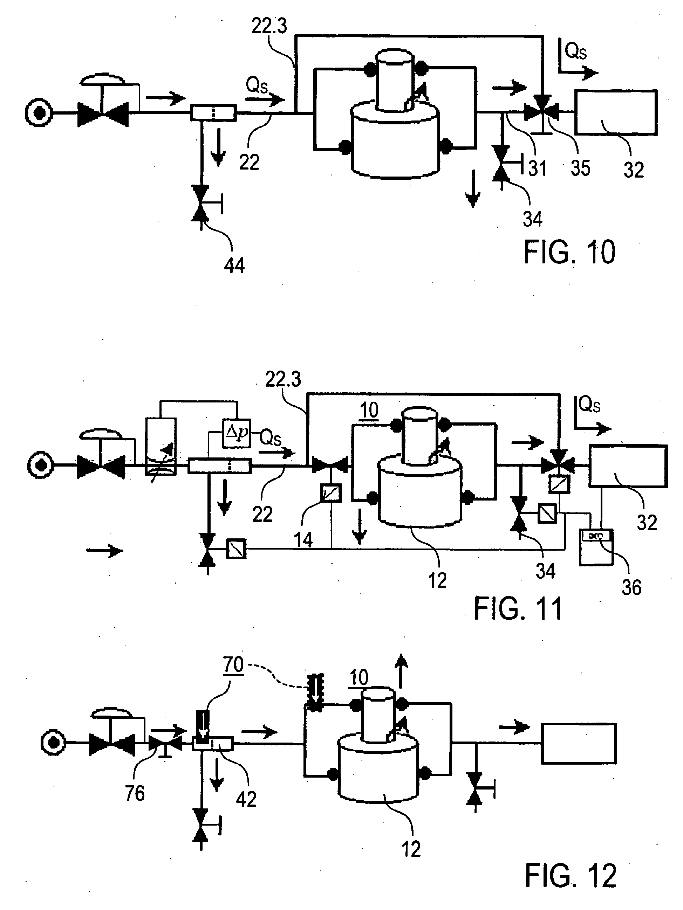

Die oben beschriebenen Varianten der Leckprüfung können für eine kombinierte dynamische und statische Spülgasmethode modifiziert werden, wie im Folgenden unter Bezug auf die Figren 10 und 11 erläutert wird. Gemäß Figur 10 ist das Strömungsschema für die Leckprüfung, wie es in Figur 2 dargestellt ist, zusätzlich mit einem 3/2-Wege-Ventil 35 in der Detektorleitung 31 und einer Bypass-Leitung 22.3 versehen, die von der Systemstromleitung 22 unmittelbar zum 3/2-Wege-Ventil 35 führt. Die Bypass-Leitung 22.3 ermöglicht, dass der Systemstrom $Q_S$ direkt zum Detektor 32 geleitet wird. Dies ist vorteilhaft, weil die Volumenbilanz des Detektors 32 während der Leckprüfung konstant gehalten wird. Die Bypass-Leitung 22.3 hat den zusätzlichen Vorteil, dass für die Dauer einer Verschiebung der Hülle 12 auf dem zu prüfenden Bauteil 201 der Detektorstrom $Q_D$ konstant aufrechterhalten werden kann.

Bei der kombinierten statischen und dynamischen Spülgasmethode folgt zunächst bei einem Vorbereitungsschritt eine Spülung des Spülraums 11 mit den Stelleinrichtungen 44 und 34. In diesem Zustand ist des Weiteren das 3/2-Wege-Ventil 35 auf Durchlass von der Detektorleitung 31 zum Detektor 32 geschaltet. Die Bypass-Leitung 22.3 ist gesperrt. Abschließend wird für die Dauer von z. B. einigen Minuten die Systemleckrate bestimmt und eine Grenzfunktion mit der Bilanz der dynamischen Spülgasmethode berechnet. Ab dieser Grenzfunktion stellt sich ein Gleichgewichtszustand ein. Beim Nachweis einer Leckage kann des Weiteren durch den Wechsel von der dynamischen Spülgasmethode auf die statische Spülgasmethode die nach der dynamischen Bilanz berechnete Leckrate der Leckage und deren Grenzfunktion durch die wesentlich einfachere Bilanz der statischen Methode leicht verifiziert werden. Hierzu wird das 3-Wege-Ventil 35 geschlossen, so dass vom Detektor 32 über die Bypass-Leitung 22.3 und die Systemstromleitung 22 nur Spülgas der Spülgasversorgung vom Detektor angesaugt wird.

Beim Erreichen der berechneten Grenzfunktion wird das 3-Wege-Ventil 35 geöffnet und die Leckrate erneut mit der dynamischen Spülgasmethode bestimmt. Dies erlaubt eine Berechnung der Leckrate nach der statischen Spülgasmethode und eine Überprüfung der vorher berechneten Grenzfunktion. Ist die Systemleckrate stabil, ist die Bedingung der Grenzfunktion erfüllt. Dieser statische Zustand erlaubt es, die Leckrate der Leckage nach der Bilanz der dynamischen Spülgasmethode wesentlich leichter und gesicherter zu berechnen.

Der Vorteil der Kombination aus statischer und dynamischer Spülgasmethode besteht darin, dass die Nachweissicherheit der Leckprüfung verbessert und die ermittelte Leckrate eines Lecks am Bauteil 201 verifiziert werden kann.

Die Bypass-Leitung 22.3 und das 3/2-Wege-Ventil 35 können entsprechend auch bei dem Strömungsschema gemäß Figur 4 vorgesehen sein. Dabei ist, wie in Figur 11 dargestellt ist, zwischen dem Abzweig der Bypass-Leitung 22.3 von der Systemstromleitung 22 und der Hülle 12 der Spüleinrichtung 10 ein Hüllenventil 14 vorgesehen. Das Hüllenventil 14 ist ein Magnetventil, das mit der Spül-Steuereinrichtung 36 betätigbar ist. Wenn das Ventil 14 geschlossen und das 3/2-Wege-Ventil 35 geöffnet ist, fließt der Systemstrom $Q_S$ über die Bypass-Leitung 22.3 direkt zum Detektor 32.

Bei der dynamischen Spülgasmethode erfolgt eine Injektion einer Testgasmischung in die Leckprüfvorrichtung. Das Testgas ist eine Mischung von Testgas und Spülgas. Das Testgas kann direkt in die Teilstromkammer 42 (siehe Figur 12) oder in die Hülle 12 der Spüleinrichtung 10 injiziert werden. Hierzu ist an der Teilstromkammer 42 (oder entsprechend an der Hülle 12) eine Injektionseinrichtung 70 mit einem Ventil oder insbesondere Magnetventil 76 angeordnet.

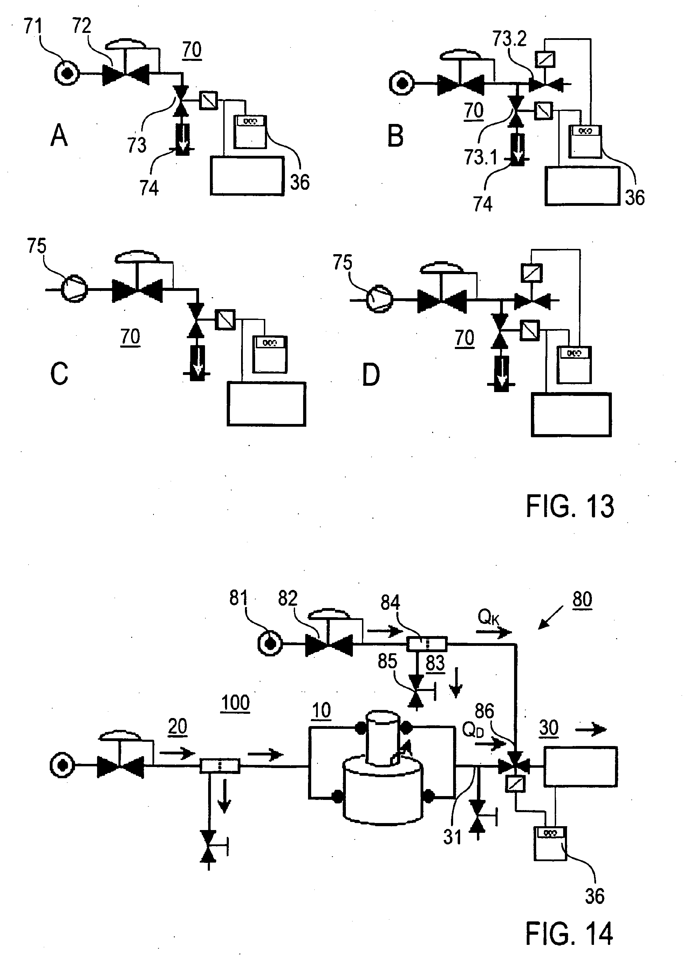

Die Injektionseinrichtung 70 umfasst im einfachsten Fall eine Spritze oder ein Dosierventil für Einführung von Luft mit einer Leckrate von $5 \cdot 10^{-6}$ mbar l/s in die Teilstromkammer. Alternativ zur Luft kann Helium oder ein Helium-Testgasgemisch oder ein atmosphärisches Testleck verwendet werden. Die Injektionseinrichtung 70 kann manuell betätigt werden. Alternativ kann eine Betätigung mit einer Steuereinrichtung, z. B. der Spül-Steuereinrichtung 36 vorgesehen sein, wie beispielhaft in Figur 13 gezeigt ist.

Gemäß Figur 13A umfasst die Injektionseinrichtung 70 eine Testgasquelle 71, eine Druckregler 72, ein Magnetventil 73 und einen Injektor 74. Die Magnetventile 73 und 76 (siehe Figur 12) werden mit der Spülsteuereinrichtung 36 betätigt, um einen vorbestimmten Volumenstrom des Testgases in die Leckprüfvorrichtung (nicht dargestellt) einzuführen. Hierzu wird das Ventil 76 geschlossen und das Ventil 73 geöffnet. Bei der Variante gemäß Figur 13B sind zwei Magnetventile 73.1, 73.2 vorgesehen, mit denen das Testgas alternativ dem Injektor 74 zugeführt oder in die Umgebung abgeleitet wird. Anstelle der Testgasquelle 71 kann gemäß den Varianten in den Figuren 13C und 13D eine Pumpe 75 vorgesehen sein, mit der das Testgas mit einem vorbestimmten Überdruck bereitgestellt wird. Die Dosierung des Testgases erfolgt mit den Magnetventilen 73 oder 73.1 in Abhängigkeit von Schaltintervallen der magnetischen Steuerung. Die Varianten der Figuren 13B und 13D haben Vorteile bei der Zufuhr kleinster Testgasvolumina, da Probleme durch die Schaltzeiten der Magnetsteuerung vermieden werden.

Im einfachsten Fall der Testgasinjektion wird durch das Injizieren einer sehr geringen Testgasmasse die Reaktionszeit der Messanordnung bestimmt.

Ein weiterer Vorteil der Testgasinjektion besteht darin, dass die Messzeit zum Erreichen der o. g. Grenzfunktion erheblich verkürzt werden kann. Durch die Injektionseinrichtung wird die Systemleckrate auf die im Vorfeld berechnete Grenzfunktion angehoben. Dieser eingestellte Systemzustand erlaubt es, die Leckrate der Leckage nach der dynamischen Bilanz wesentlich leichter und gesicherter zu berechnen. Des Weiteren besteht bei der Kenntnis über die injizierte Testgasmenge die Möglichkeit, das Volumen der Hülle zu berechnen und somit die Leckrate der Leckage wesentlich genauer zu bestimmen.

Der Vorteil der Injektion für die dynamische Spülgasmethode besteht in der erheblichen Reduzierung der Messzeit. Durch die Ermittlung der Systemleckrate über einige Minuten kann die Leckrate an dem zu testenden Bauteil aus der Grenzfunktion der Systemleckrate berechnet werden.

Figur 14 illustriert eine weiteren Ausführungsform der erfindungsgemäßen Leckprüfvorrichtung 100, die mit der Spüleinrichtung 10, der Gaszufuhreinrichtung 20 und der Detektoreinrichtung 30 wie die in Figur 2 gezeigte Ausführungsform der Leckprüfvorrichtung aufgebaut ist. Zusätzlich ist eine Kalibrierungseinrichtung 80 vorgesehen, die eine Kalibriergasquelle 81, einen Druckregler 82 und eine Kalibrierungstrom-Teilereinrichtung 83 mit einer Kalibrierstrom-Teilstromkammer 84 und einer Kalibrierstrom-Stelleinrichtung 85 über ein 3/2-Wege-Ventil 86 an die Detektorleitung 31 angeschlossen ist. Das 3/2-Wege-Ventil 86 ist mit der Spül-Steuereinrichtung 36 magnetisch betätigbar.

Zur Kalibrierung des Detektors 32 wird das 3/2-Wege-Ventil 86 vom Detektorstrom $Q_D$ auf den Kalibrierstrom $Q_K$ umgeschaltet, der analog zur Funktion der oben beschriebenen Teilstromeinrichtung 40 mit der Kalibrierstrom-Stelleinrichtung 85 mechanisch oder elektronisch gesteuert geregelt wird. Die Kalibrierung erfolgt mit einem Kalibriergas z. B. mit Druckluft oder einer Testgasmischung.

Auf die Kalibrierstrom-Teilstromregelung 83 kann verzichtet werden, wenn die Einstellung des Kalibrierstroms $Q_K$ mit dem Druckregler 82 genügend genau erfolgt. Die Bereitstellung der Kalibrierstrom-Teilereinrichtung 83 hat jedoch den Vorteil, dass der Kalibrierstrom $Q_K$ mit hoher Genauigkeit an die Einstellung des Systemstroms $Q_S$ angepasst werden kann. Hierzu ist gemäß einer alternativen Variante eine geregelte Kalibrierstrom-Teilstromregelung 83 vorgesehen, die analog zum oben beschriebenen ersten Regelkreis 50 (siehe Figur 4) aufgebaut ist.

Figur 15 illustriert eine weitere Ausführungsform der erfindungsgemäßen Leckprüfvorrichtung 100 mit der Spüleinrichtung 10, der Gaszufuhreinrichtung 20 und der Detektoreinrichtung 30. Die Spüleinrichtung 10 umfasst eine starre Hülle 12 zur Bildung des Spülraums 11 an dem zu prüfenden Bauteil 201 (Rohrleitung). Über die Systemstromleitung 22 und die Strömungseinheit 22.1 wird Spülgas von der Gaszufuhreinrichtung 20 in die Spüleinrichtung 10 geleitet. Die Detektoreinrichtung 30 umfasst die Detektorstromleitung 31 und den Detektor 32. An dem Ende der Detektorstromleitung 31, das in den Spülraum 11 ragt, ist eine Schnüffelsonde 31.1 angeordnet. Das zu prüfende Bauteil 201 ist mit einer Leckgas-Quelle 202 verbunden, die z. B. eine Helium-Quelle umfasst.

Bei der in Figur 15 gezeigten Ausführungsform der Erfindung ist die Spüleinrichtung 10 mit einer Temperiereinrichtung 90 ausgestattet, mit der das Spülgas im Spülraum 11 und das zu prüfende Bauteil 201 temperierbar sind. Die Temperiereinrichtung 90 umfasst einen Stickstoff-Kühler 91 zur Aufnahme von flüssigem Stickstoff. Der Stickstoff-Kühler 91 wird aus dem Stickstoff-Reservoir 92 mit flüssigem Stickstoff versorgt. Verdampfender Stickstoff wird über eine Leitung 93 in die Umgebung abgelassen.

Wenn der Druck im Spülraum 11 durch die Temperierung mit flüssigem Stickstoff reduziert wird, liefert die erfindungsgemäß verwendete Teilstromtechnik vorteilhafterweise einen vergrößerten Systemstrom des Spülgases in die Spüleinrichtung 10. Damit wird für die Leckgasprüfung in der Spüleinrichtung 10 vorteilhafterweise ein stabiler Zustand abhängig von der Prüftemperatur erreicht. Alternativ zu der illustrierten Kühlung des zu prüfenden Bauteils kann mit entsprechenden Mitteln eine Heizung vorgesehen sein.

Figur 16 illustriert eine Ausführungsform der Erfindung, bei der die Spüleinrichtung 10 eine Hülle 12 mit einer Zylinderform aufweist, in schematischer Schnittansicht. Um das zu prüfende Bauteil 201 (Rundnaht zwischen zwei Vakuumrohren) ist ein ringförmiger Spülraum 11 gebildet. Die Strömungseinheit 22.1, an der die Systemstromleitung 22 angeschlossen ist, und die Schnüffelsonde 31.1, mit der die Detektorleitung 31 verbunden ist, sind an der Hülle 12 beweglich angeordnet. Beide Komponenten 22.1 und 31.1 können mit einer Antriebseinheit 15 um das Bauteil 201 bewegt werden. Insbesondere die Schnüffelsonde 31.1 kann um das Bauteil 201 gedreht werden, um ein Leck zu lokalisieren.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

**Patentansprüche**

1. Verfahren zur Detektion eines Leckgases in einer Spüleinrichtung (10), wobei das Leckgas vom Inneren eines Bauteils (201) in einen Spülraum (11) der Spüleinrichtung (10) austreten kann, mit den Schritten:

  - Anordnung der Spüleinrichtung (10) an einem zu prüfenden Bauteil (201),
  - Durchleitung eines Spülgases durch die Spüleinrichtung (10), und
  - Detektion des Leckgases in dem Spülgas, das aus der Spüleinrichtung (10) austritt, mit einer Detektoreinrichtung (30),

  **gekennzeichnet durch** die Schritte:

  - Erzeugung eines vorbestimmten Hauptstroms ($Q_H$) des Spülgases mit einer Spülgasquelle (23), und
  - Teilung des Hauptstrom ($Q_H$) an einer Teilereinrichtung (40) in einen Systemstrom ($Q_S$), der in die Spüleinrichtung (10) zugeführt wird, und einen Teilstrom ($Q_T$), der in eine Umgebung oder in ein Regenerationsgefäß abgeleitet wird, wobei
  - der Systemstrom ($Q_S$) mit der Teilung des Hauptstroms ($Q_H$) eingestellt wird.

2. Verfahren nach Anspruch 1, mit dem Schritt:

   - Einstellung eines vorbestimmten Volumenstromwertes des Teilstroms ($Q_T$).

3. Verfahren nach Anspruch 2, bei dem zur Einstellung des Volumenstromwertes des Teilstroms ($Q_T$) ein vorbestimmter Strömungswiderstand in einer Teilstromleitung (41) der Teilereinrichtung (40) vorgesehen ist.

4. Verfahren nach Anspruch 3, bei dem der Strömungswiderstand durch eine Auswahl wenigstens einer der Größen bereitgestellt wird, die einen Durchmesser der Teilstromleitung (41), eine Länge der Teilstromleitung (41) und eine Stellgröße einer Teilstrom-Stelleinrichtung (44) in der Teilstromleitung umfassen.

5. Verfahren nach Anspruch 4, bei dem die Teilstrom-Stelleinrichtung (44) in der Teilstromleitung manuell oder mit einem Differenzdruckmanometer eingestellt wird.

6. Verfahren nach einem der Ansprüche 3 bis 5, bei dem der Teilstrom ($Q_T$) in Abhängigkeit vom Druck in der Spüleinrichtung (10) oder in der Detektoreinrichtung (30) eingestellt wird.

7. Verfahren nach einem der vorhergehenden Ansprüche, mit dem Schritt:

   - Einstellung eines vorbestimmten Volumenstromwertes des Hauptstroms ($Q_H$) mit einer Hauptstrom-Stelleinrichtung (24).

8. Verfahren nach Anspruch 7, bei dem der Hauptstrom ($Q_H$) durch wenigstens eine der Maßnahmen eingestellt wird, die eine Druckeinstellung, eine Takteinstellung und eine Durchflusseinstellung umfassen.

9. Verfahren nach Anspruch 7 oder 8, bei dem der Hauptstrom ($Q_H$) in Abhängigkeit vom Druck in der Spüleinrichtung (10) oder in der Detektoreinrichtung (30) eingestellt wird.

10. Verfahren nach mindestens einem der vorhergehenden Ansprüche, mit dem Schritt:

    - Kalibrierung der Detektoreinrichtung (30).

11. Verfahren nach Anspruch 10, bei dem während der Kalibrierung das Spülgas direkt zur Detektoreinrichtung (30) geleitet wird, ohne durch die Spüleinrichtung (10) hindurch zutreten.

12. Verfahren nach Anspruch 11, bei dem die Kalibrierung eine Injektion eines Kalibrierungsgases in das Spülgas umfasst.

13. Verfahren nach Anspruch 12, bei dem zur Injektion wenigstens eine der Maßnahmen vorgesehen ist, die eine Spritzeninjektion, eine Testleckinjektion, eine Hubkolbenventilinjektion und eine Pumpeninjektion umfassen.

14. Verfahren nach Anspruch 10, bei dem während der Kalibrierung ein Kalibrierungsstrom ($Q_K$) zur Detektoreinrichtung (30) geleitet wird.

15. Verfahren nach Anspruch 14, bei dem der Kalibrierungsstrom ($Q_K$) mit einer Kalibrierungsstrom-Teilereinrichtung (83) bereitgestellt wird.

16. Verfahren nach mindestens einem der vorhergehenden Ansprüche, bei dem mit der Detektoreinrichtung (30) ein Unterdruck erzeugt wird, unter dessen Wirkung der Systemstrom ($Q_S$) durch die Spüleinrichtung (10) gesaugt wird.

17. Leckprüfvorrichtung (100) zur Detektion eines Leckgases in einer Spüleinrichtung (10), wobei das Leckgas vom Inneren eines Bauteils (201) in einen Spülraum (11) der Spüleinrichtung (10) austreten kann, umfassend:

    - eine Gaszufuhreinrichtung (20) zur Durchleitung eines Spülgases durch die Spüleinrichtung (10), und
    - eine Detektoreinrichtung (30) zur Detektion des Leckgases in dem Spülgas, das aus der Spüleinrichtung (10) austritt, **dadurch gekennzeichnet, dass**
    - die Gaszufuhreinrichtung (20) eine Spülgasquelle (23) zur Bereitstellung eines vorbestimmten Hauptstroms ($Q_H$) des Spülgases aufweist, und

- die Gaszufuhreinrichtung (20) eine Teilereinrichtung (40) zur Teilung des Hauptstroms ($Q_H$) des Spülgases in einen in die Spüleinrichtung (10) geleiteten Systemstrom ($Q_S$) und einen Teilstrom ($Q_T$) aufweist, der in eine Umgebung oder in ein Regenerationsgefäß ableitbar ist, wobei
- der Systemstrom ($Q_S$) mit der Teilung des Hauptstroms ($Q_H$) einstellbar ist.

18. Leckprüfvorrichtung nach Anspruch 17, bei der die Teilereinrichtung (40) ein T-Stück (42, 43, 42.1, 42.2) aufweist, an dem sich eine Hauptstromleitung (21) in eine Systemstromleitung (22) und eine Teilstromleitung (41) teilt.

19. Leckprüfvorrichtung nach Anspruch 18, bei der das T-Stück eine Teilstromkammer (42, 42.3) aufweist, von der die Systemstromleitung (22) und die Teilstromleitung (41) abzweigen.

20. Leckprüfvorrichtung nach Anspruch 19, bei der die Teilstromkammer (42, 42.3) am Abzweig der Systemstromleitung (22) eine Drosseleinrichtung (43) aufweist.

21. Leckprüfvorrichtung nach Anspruch 18 oder 19, bei der der Teilstrom ($Q_T$) in der Teilstromleitung (41) durch wenigstens eine der Maßnahmen einstellbar ist, die eine Bereitstellung eines vorbestimmten Durchmessers der Teilstromleitung (41), eine Bereitstellung einer vorbestimmten Länge der Teilstromleitung (41) und eine Einstellung einer Teilstrom-Stelleinrichtung (44) umfassen.

22. Leckprüfvorrichtung nach Anspruch 21, bei der die Teilstrom-Stelleinrichtung (44) manuell, magnetisch getaktet oder mit einem Differenzdruckmanometer einstellbar ist.

23. Leckprüfvorrichtung nach mindestens einem der Ansprüche 17 bis 22, bei der die Gaszufuhreinrichtung (20) eine Hauptstrom-Stelleinrichtung (23) zur Einstellung des Hauptstroms ($Q_H$) aufweist.

24. Leckprüfvorrichtung nach Anspruch 23, bei der die Hauptstrom-Stelleinrichtung (24) für wenigstens eine der Maßnahmen ausgelegt ist, die eine Druckeinstellung, eine Takteinstellung und eine Durchflusseinstellung umfassen.

25. Leckprüfvorrichtung nach Anspruch 21, bei der die Hauptstrom-Stelleinrichtung (24) manuell oder mit einem Differenzdruckmanometer einstellbar ist.

26. Leckprüfvorrichtung nach Anspruch 24, bei der ein erster Regelkreis (50) vorgesehen ist, mit dem die Hauptstrom-Stelleinrichtung (24) in Abhängigkeit vom Druck in der Spüleinrichtung (10) oder in der Detektoreinrichtung (30) regelbar ist.

27. Leckprüfvorrichtung nach mindestens einem der Ansprüche 17 bis 26, bei der ein zweiter Regelkreis (60) vorgesehen ist, mit dem die Teilstrom-Stelleinrichtung (44) in Abhängigkeit vom Druck in der Spüleinrichtung (10) oder in der Detektoreinrichtung (30) regelbar ist.

28. Leckprüfvorrichtung nach mindestens einem der Ansprüche 17 bis 27, die eine Kalibrierungseinrichtung (80) zur Kalibrierung der Detektoreinrichtung (30) aufweist.

29. Leckprüfvorrichtung nach Anspruch 28, bei der die Kalibrierungseinrichtung (80) eine Kalibrierungsquelle (81) aufweist, von der ein Kalibrierungsstrom ($Q_K$) zur Detektoreinrichtung (30) geleitet werden kann.

30. Leckprüfvorrichtung nach mindestens einem der Ansprüche 17 bis 29, bei der die Gaszufuhreinrichtung (20) einen Bypass (22.3) aufweist, über den der Systemstrom ($Q_S$) des Spülgases direkt zur Detektoreinrichtung (30) geleitet werden kann, ohne durch die Spüleinrichtung (10) hindurch zutreten.

31. Leckprüfvorrichtung nach mindestens einem der Ansprüche 17 bis 30, die eine Injektionseinrichtung (70) zur Injektion eines Kalibrierungsgases in den Systemstrom ($Q_S$) oder eine Spülgashülle (12) aufweist.

32. Leckprüfvorrichtung nach Anspruch 31, bei der die Injektionseinrichtung (70) mit der Teilereinrichtung (40) oder der Spüleinrichtung (10) verbunden ist.

33. Leckprüfvorrichtung nach Anspruch 31 oder 32, bei der die Injektionseinrichtung (80) wenigstens eines von einer Injektionsspritze (81), einem Testleck (82), einem Hubkolbenventil (83) und einer Pumpe (84) aufweist.

34. Leckprüfvorrichtung nach mindestens einem der Ansprüche 17 bis 33, bei der die Teilereinrichtung (40) einen Verschluss (47) zum Abschluss der Teilstromleitung (41) oder anderer offener Leitungen gegenüber einer atmosphärischen Umgebung aufweist.

35. Leckprüfvorrichtung nach mindestens einem der Ansprüche 17 bis 34, bei der die Spüleinrichtung (10) Teil der Leckprüfvorrichtung (100) ist.

36. Leckprüfvorrichtung nach Anspruch 35, bei der die Spüleinrichtung (10) mit einer Temperiereinrichtung (90) ausgestattet ist.

37. Leckprüfvorrichtung nach Anspruch 35 oder 36, bei der die Spüleinrichtung (10) eine Hülle (12) mit einer Zylinderform aufweist.

38. Leckprüfvorrichtung nach mindestens einem der Ansprüche 17 bis 37, bei der die Gaszufuhreinrichtung (20) eine Strömungseinheit (22.1) aufweist, die in einen von der Spüleinrichtung (10) umschlossenen Spülraum (11) mündet.

39. Leckprüfvorrichtung nach mindestens einem der Ansprüche 17 bis 38, bei der die Detektoreinrichtung (30) eine Schnüffelsonde (31.1) aufweist, die über eine Detektorstromleitung (31) mit einem Detektor (32) verbunden ist.

40. Leckprüfvorrichtung nach Anspruch 38 oder 39, bei der die Strömungseinheit (22.1) und/oder die Schnüffelsonde (31.1) an der Spüleinrichtung (10) beweglich angeordnet ist.

41. Leckprüfvorrichtung nach Anspruch 40, bei der die Strömungseinheit (22.1) und/oder die Schnüffelsonde (31.1) um ein zu prüfendes Bauteil (201) drehbar angeordnet ist.

**Claims**

1. A method for detecting a leak gas in a flushing device (10), wherein the leak gas can emerge from an inner side of a component (201) into a flushing space (11) of the flushing device (10), comprising the steps:

   - arrangement of the flushing device (10) on the component (201) to be tested,
   - passing a flushing gas through the flushing device (10), and
   - detecting of the leak gas in the flushing gas which emerges from the flushing device (10) with a detector device (30),

   **characterised by** the steps:

   - generating a pre-determined main flow ($Q_H$) of the flushing gas with a flushing gas source (23), and
   - dividing the main flow ($Q_H$) in a dividing device (40) into a system flow ($Q_S$), which is fed into the flushing device (10), and a partial flow ($Q_T$), which is conducted to a surrounding or into a regeneration vessel, wherein the system flow ($Q_S$) is set with the dividing of the main flow ($Q_H$).

2. The method according to claim 1, comprising the step:

   - setting a pre-determined volume flow rate for the partial flow ($Q_T$).

3. The method according to claim 2, wherein for setting the volume flow rate of the partial flow ($Q_T$), a pre-determined flow resistance is provided in a partial flow line (41) of the dividing device (40).

4. The method according to claim 3, wherein the flow resistance is provided by selecting at least one of the variables comprising a diameter of the partial flow line (41), a length of the partial flow line (41), and an adjustable variable of a partial flow adjusting device (44) in the partial flow line.

5. The method according to claim 4, wherein the partial flow adjusting device (44) in the partial flow line is adjusted manually or with a differential pressure manometer.

6. The method according to one of the claims 3 to 5, wherein the partial flow ($Q_T$) is adjusted depending on the pressure in the flushing device (10) or in the detector device (30).

7. The method according to one of the preceding claims, comprising the step:

   - setting a pre-determined volume flow rate for the main flow ($Q_H$) with a main flow adjusting device (24).

8. The method according to claim 7, wherein the main flow ($Q_H$) is set with at least one of the measures comprising pressure adjustment, cycle adjustment and flow adjustment.

9. The method according to claim 7 or 8, wherein the main flow ($Q_H$) is set depending on the pressure in the flushing device (10) or in the detector device (30).

10. The method according to at least one of the preceding claims, comprising the step:

    - calibration of the detector device (30).

11. The method according to claim 10, wherein during the calibration, the flushing gas is fed directly to the detector device (30) without passing through the flushing device (10).

12. The method according to claim 11, wherein the calibration comprises an injection of a calibration gas into the flushing gas.

13. The method according to claim 12, wherein at least one of the measures comprising syringe injection, test leak injection, injection by means of a lifting valve and pump injection is provided for the injection.

14. The method according to claim 10, wherein during the calibration, a calibration flow ($Q_K$) is passed to the detector device (30).

15. The method according to claim 14, wherein the calibration flow ($Q_K$) is provided with a calibration flow dividing device (83).

16. The method according to at least one of the preceding claims, wherein the detector device (30) generates a negative pressure under the effect of which the system flow ($Q_S$) is drawn through the flushing device (10).

17. A leak detection apparatus (100) for detecting a leak gas in a flushing device (10), wherein the leak gas can emerge from an inner side of a component (201) into a flushing space (11) of the flushing device (10), comprising:

    - a gas feed device (20) for conducting a flushing gas through the flushing device (10), and
    - a detector device (30) for detecting the leak gas in the flushing gas that emerges from the flushing device (10),

    **characterised in that**

    - the gas feed device (20) has a flushing gas source (23) for providing a predetermined main flow ($Q_H$) of the flushing gas, and
    - the gas feed device (20) has a dividing device (40) for dividing the main flow ($Q_H$) of the flushing gas into a system flow ($Q_S$) fed into the flushing device (10) and a partial flow ($Q_T$), which can be conducted to a surrounding or into a regeneration vessel, wherein
    - the system flow ($Q_S$) can be set by the dividing of the main flow ($Q_H$)

18. The leak detection apparatus according to claim 17, wherein the dividing device (40) comprises a T-piece (42, 43, 42.1, 42.2), at which a main flow line (21) divides into a system flow line (22) and a partial flow line (41).

19. The leak detection apparatus according to claim 18, wherein the T-piece comprises a partial flow chamber (42, 42.3) from which the system flow line (22) and the partial flow line (41) branch off.

20. The leak detection apparatus according to claim 19, wherein the partial flow chamber (42, 42.3) comprises a throttle device (43) at the branching off of the system flow line (22).

21. The leak detection apparatus according to claim 18 or 19, wherein the partial flow ($Q_T$) in the partial flow line (41) can be set by means of at least one of the measures comprising provision of a pre-determined diameter of the partial flow line (41), provision of a pre-determined length of the partial flow line (41) and adjustment of a partial flow adjusting device (44).

22. The leak detection apparatus according to claim 21, wherein the partial flow adjusting device (44) can be set manually, magnetically cycled or with a differential pressure manometer.

23. The leak detection apparatus according to one of the claims 17 to 22, wherein the gas feed device (20) comprises a main flow adjusting device (23) for adjusting the main flow ($Q_H$).

24. The leak detection apparatus according to claim 23, wherein the main flow adjusting device (24) is configured for at least one of the measures comprising pressure adjustment, cycle adjustment and flow adjustment.

25. The leak detection apparatus according to claim 21, wherein the main flow adjusting device (24) is adjustable manually or with a differential pressure manometer.

26. The leak detection apparatus according to claim 24, wherein a first control circuit (50) is provided, with which the main flow adjusting device (24) is controllable depending on the pressure in the flushing device (10) or in the detector device (30).

27. The leak detection apparatus according to at least one of the claims 17 to 26, wherein a second control circuit (60) is provided, with which the partial flow adjusting device (44) is controllable depending on the pressure in the flushing device (10) or in the detector device (30).

28. The leak detection apparatus according to at least one of the claims 17 to 27, comprising a calibration device (80) for calibrating the detector device (30).

29. The leak detection apparatus according to claim 28, wherein the calibration device (80) comprises a calibration source (81), from which a calibration flow ($Q_K$) can be conducted to the detector device (30).

30. The leak detection apparatus according to at least one of the claims 17 to 29, wherein the gas feed device (20) has a bypass (22.3), via which the system flow ($Q_S$) of the flushing gas can be fed directly to the detector device (30) without passing through the flushing device (10).

31. The leak detection apparatus according to at least one of the claims 17 to 30, comprising an injection device (70) for injecting a calibration gas into the system flow ($Q_S$) or a flushing gas covering (12).

32. The leak detection apparatus according to claim 31, wherein the injection device (70) is connected to the dividing device (40) or the flushing device (10).

33. The leak detection apparatus according to claim 31 or 32, wherein the injection device (80) comprises at least an injection syringe (81), a test leak (82), a lifting valve (83) and a pump (84).

34. The leak detection apparatus according to at least one of the claims 17 to 33, wherein the dividing device (40) comprises a closure (47) for closing the partial flow line (41) or other open lines relative to a surrounding atmosphere.

35. The leak detection apparatus according to at least one of the claims 17 to 34, wherein the flushing device (10) is part of the leak detection apparatus (100).

36. The leak detection apparatus according to claim 35, wherein the flushing device (10) is equipped with a tempering device (90).

37. The leak detection apparatus according to claim 35 or 36, wherein the flushing device (10) comprises a covering (12) with a cylindrical shape.

38. The leak detection apparatus according to one of the claims 17 to 37, wherein the gas feed device (20) comprises a flow unit (22.1) which opens into a flushing chamber (11) enclosed by the flushing device (10).

EP 2 005 135 B1

**39.** The leak detection apparatus according to at least one of the claims 17 to 38, wherein the detector device (30) comprises a sniffer probe (31.1) which is connected via a detector flow line (31) to a detector (32).

**40.** The leak detection apparatus according to claim 38 or 39, wherein the flow unit (22.1) and/or the sniffer probe (31.1) is movably arranged on the flushing device (10).

**41.** The leak detection apparatus according to claim 40, wherein the flow unit (22.1) and/or the sniffer probe (31.1) is rotatably arranged round a component (201) to be tested.

**Revendications**

**1.** Procédé pour la détection d'un gaz provenant d'une fuite dans un dispositif de rinçage (10), ledit gaz provenant d'une fuite pouvant s'épandre de l'intérieur d'un composant (201) dans une chambre de rinçage (11) du dispositif de rinçage (10), comprenant les étapes suivantes :

- mise en place du dispositif de rinçage (10) sur un composant (201) à contrôler,
- conduction d'un gaz de rinçage au travers du dispositif de rinçage (10), et
- détection du gaz provenant d'une fuite dans le gaz de rinçage sortant du dispositif de rinçage (10), au moyen d'un dispositif détecteur (30),

**caractérisé**
**par** les étapes suivante

- génération d'un courant principal défini ($Q_H$) du gaz de rinçage au moyen d'une source de gaz de rinçage (23), et
- séparation du courant principal ($Q_H$) sur un dispositif diviseur (40), en un courant de système (Qs) amené dans le dispositif de rinçage (10), et en un courant partiel ($Q_T$) évacué dans l'environnement ou vers un réservoir de régénération,
- le courant de système (Qs) étant réglé par la division du courant principal ($Q_H$).

**2.** Procédé selon la revendication 1, comprenant l'étape suivante :

- réglage d'une valeur de débit volumique définie pour le courant partiel ($Q_T$).

**3.** Procédé selon la revendication 2, où, pour le réglage de la valeur de débit volumique du courant partiel ($Q_T$), une résistance à l'écoulement définie est prévue dans une conduite de courant partiel (41) du dispositif diviseur (40).

**4.** Procédé selon la revendication 3, où la résistance à l'écoulement est obtenue par sélection d'au moins une des grandeurs parmi un diamètre de la conduite de courant partiel (41), une longueur de la conduite de courant partiel (41) et une grandeur de réglage d'un dispositif de réglage de courant partiel (44) dans la conduite de courant partiel.

**5.** Procédé selon la revendication 4, où le dispositif de réglage de courant partiel (44) est réglé manuellement ou au moyen d'un instrument de mesure de pression différentielle dans la conduite de courant partiel.

**6.** Procédé selon l'une des revendications 3 à 5, où le courant partiel ($Q_T$) est réglé en fonction de la pression dans le dispositif de rinçage (10) ou dans le dispositif détecteur (30).

**7.** Procédé selon l'une des revendications précédentes, comprenant l'étape suivant

- réglage d'une valeur de débit volumique définie pour le courant principal ($Q_H$) au moyen d'un dispositif de réglage du courant principal (24).

**8.** Procédé selon la revendication 7, où le courant principal ($Q_H$) est réglé par au moins une mesure parmi un réglage de pression, un réglage de cycle et un réglage de débit.

**9.** Procédé selon la revendication 7 ou 8, où le courant principal (QH) est réglé en fonction de la pression dans le dispositif de rinçage (10) ou dans le dispositif détecteur (30).

18

**10.** Procédé selon au moins l'une des revendications précédentes, comprenant l'étape suivante :

- calibrage du dispositif détecteur (30).

**11.** Procédé selon la revendication 10, où pendant le calibrage, le gaz de rinçage est directement conduit vers le dispositif détecteur (30), sans traverser le dispositif de rinçage (10).

**12.** Procédé selon la revendication 11, où le calibrage comprend une injection d'un gaz de calibrage dans le gaz de rinçage.

**13.** Procédé selon la revendication 12, où, pour l'injection, il est prévu au moins une mesure parmi une injection par seringue, une injection par unité de fuite d'essai, une injection par soupape à piston alternatif et une injection par pompe.

**14.** Procédé selon la revendication 10, où pendant le calibrage, un courant de calibrage ($Q_k$) est conduit vers le dispositif détecteur (30).

**15.** Procédé selon la revendication 14, où le courant de calibrage ($Q_k$) est obtenu au moyen d'un dispositif diviseur de courant de calibrage (83).

**16.** Procédé selon au moins l'une des revendications précédentes, où une dépression est générée par le dispositif détecteur (30), laquelle entraîne une aspiration du courant de système ($Q_S$) au travers du dispositif de rinçage (10).

**17.** Dispositif de contrôle des fuites (100) pour la détection d'un gaz provenant d'une fuite dans un dispositif de rinçage (10), comprenant :

- un dispositif d'amenée de gaz (20) pour la conduction d'un gaz de rinçage au travers du dispositif de rinçage (10), et
- un dispositif détecteur (30) pour la détection du gaz provenant d'une fuite dans le gaz de rinçage sortant du dispositif de rinçage (10),

**caractérisé**

- **en ce que** le dispositif d'amenée de gaz (20) est pourvu d'une source de gaz de rinçage (23) pour l'obtention d'un courant principal défini ($Q_H$) du gaz de rinçage, et
- **en ce que** le dispositif d'amenée de gaz (20) est pourvu d'un dispositif diviseur (40) pour la séparation du courant principal ($Q_H$) du gaz de rinçage en un courant de système ($Q_S$) amené dans le dispositif de rinçage (10), et en un courant partiel ($Q_T$) évacué dans l'environnement ou vers un réservoir de régénération,
- le courant de système ($Q_S$) étant réglé par la division du courant principal ($Q_H$).

**18.** Dispositif de contrôle des fuites selon la revendication 17, où le dispositif diviseur (40) est pourvu d'une pièce en T (42, 43, 42.1, 42.2) sur laquelle une conduite de courant principal (21) est séparée en une conduite de courant de système (22) et une conduite de courant partiel (41).

**19.** Dispositif de contrôle des fuites selon la revendication 18, où la pièce en T est pourvue d'un compartiment de courant partiel (42, 42.3) à partir duquel la conduite de courant de système (22) et la conduite de courant partiel (41) bifurquent l'une de l'autre.

**20.** Dispositif de contrôle des fuites selon la revendication 19, où le compartiment de courant partiel (42, 42.3) est pourvu d'un dispositif d'étranglement (43) sur la bifurcation de la conduite de courant de système (22).

**21.** Dispositif de contrôle des fuites selon la revendication 18 ou 19, où le courant partiel ($Q_T$) est réglable dans la conduite de courant partiel (41) par au moins une mesure parmi un diamètre défini de la conduite de courant partiel (41), une préparation d'une longueur définie de la conduite de courant partiel (41) et un réglage d'un dispositif de réglage de courant partiel (44).

**22.** Dispositif de contrôle des fuites selon la revendication 21, où le dispositif de réglage de courant partiel (44) est réglable manuellement, par synchronisation magnétique ou au moyen d'un instrument de mesure de pression différentielle.

**23.** Dispositif de contrôle des fuites selon au moins l'une des revendications 17 à 22, où le dispositif d'amenée de gaz (20) est pourvu d'un dispositif de réglage de courant principal (23), pour le réglage du courant principal ($Q_H$).

**24.** Dispositif de contrôle des fuites selon la revendication 23, où le dispositif de réglage du courant principal (24) est prévu pour au moins une mesure parmi un réglage de pression, un réglage de cycle et un réglage de débit.

**25.** Dispositif de contrôle des fuites selon la revendication 21, où le dispositif de réglage du courant principal (24) est réglable manuellement ou au moyen d'un instrument de mesure de pression différentielle.

**26.** Dispositif de contrôle des fuites selon la revendication 24, où il est prévu un premier circuit de réglage (50) au moyen duquel le dispositif de réglage du courant principal (24) est réglable en fonction de la pression dans le dispositif de rinçage (10) ou dans le dispositif détecteur (30).

**27.** Dispositif de contrôle des fuites selon au moins l'une des revendications 17 à 26, où il est prévu un deuxième circuit de réglage (60) au moyen duquel le dispositif de réglage de courant partiel (44) est réglable en fonction de la pression dans le dispositif de rinçage (10) ou dans le dispositif détecteur (30).

**28.** Dispositif de contrôle des fuites selon au moins l'une des revendications 17 à 27, lequel est pourvu d'un dispositif de calibrage (80) pour le calibrage du dispositif détecteur (30).

**29.** Dispositif de contrôle des fuites selon la revendication 28, où le dispositif de calibrage (80) est pourvu d'une source de calibrage (81) à partir de laquelle un courant de calibrage ($Q_k$) peut être conduit vers le dispositif détecteur (30).

**30.** Dispositif de contrôle des fuites selon au moins l'une des revendications 17 à 29, où le dispositif d'amenée de gaz (20) est pourvue d'une dérivation (22.3) au moyen de laquelle le courant de système ($Q_S$) du gaz de rinçage peut être directement conduit vers le dispositif détecteur (30) sans traverser le dispositif de rinçage (10).

**31.** Dispositif de contrôle des fuites selon au moins l'une des revendications 17 à 30, lequel est pourvu d'un dispositif d'injection (70) pour l'injection d'un gaz de calibrage dans le courant de système ($Q_S$) ou d'une gaine de gaz de rinçage (12).

**32.** Dispositif de contrôle des fuites selon la revendication 31, où le dispositif d'injection (70) est relié au dispositif diviseur (40) ou au dispositif de rinçage (10).

**33.** Dispositif de contrôle des fuites selon la revendication 31 ou 32, où le dispositif d'injection (70) est pourvu d'au moins un élément parmi une seringue d'injection (81), une unité de fuite d'essai (82), une soupape à piston alternatif (83) et une pompe (84).

**34.** Dispositif de contrôle des fuites selon au moins l'une des revendications 17 à 33, où le dispositif diviseur (40) est pourvu d'une fermeture (47) pour l'obturation de la conduite de courant partiel (41) ou d'autres conduites ouvertes par rapport à un environnement atmosphérique.

**35.** Dispositif de contrôle des fuites selon au moins l'une des revendications 17 à 34, où le dispositif de rinçage (10) fait partie du dispositif de contrôle des fuites (100).

**36.** Dispositif de contrôle des fuites selon la revendication 35, où le dispositif de rinçage (10) est pourvu d'un dispositif de thermostatisation (90).

**37.** Dispositif de contrôle des fuites selon la revendication 35 ou 36, où le dispositif de rinçage (10) est pourvu d'une gaine (12) en forme de cylindre.

**38.** Dispositif de contrôle des fuites selon au moins l'une des revendications 17 à 37, où le dispositif d'amenée de gaz (20) est pourvu d'une unité d'écoulement (22.1) qui débouche dans une chambre de rinçage (11) entourée par le dispositif de rinçage (10).

**39.** Dispositif de contrôle des fuites selon au moins l'une des revendications 17 à 38, où le dispositif détecteur (30) est pourvu d'une sonde de reniflage (31.1) reliée à un détecteur (32) par une conduite de courant de détecteur (31).

**40.** Dispositif de contrôle des fuites selon la revendication 38 ou 39, où l'unité d'écoulement (22.1) et/ou la sonde de reniflage (31.1) sont disposées de manière à être déplaçables sur le dispositif de rinçage (10).

**41.** Dispositif de contrôle des fuites selon la revendication 40, où l'unité d'écoulement (22.1) et/ou la sonde de reniflage (31.1) sont disposées de manière à être rotatives autour d'un composant (201) à contrôler.

FIG. 1

FIG. 2

FIG. 3

FIG. 4

FIG. 5

FIG. 6

FIG. 7

FIG. 8

FIG. 9

FIG. 10

FIG. 11

FIG. 12

71  72                                          73.2

         70

A                        B                          70

    73                                73.1

       74              36                74              36

75                                          75

                   70                          70

C                        D

FIG. 13

                 81   82        84        $Q_K$        80

                    85   83

       100                         86   $Q_D$        30

       20            10

                                         31

                                              36

                                    FIG. 14

**FIG. 15**

**FIG. 16**

**FIG. 17**

**IN DER BESCHREIBUNG AUFGEFÜHRTE DOKUMENTE**

**In der Beschreibung aufgeführte Patentdokumente**

- DE 10306245

- DE 10316332 A1

**In der Beschreibung aufgeführte Nicht-Patentliteratur**

- *Zerstörungsfreie Materialprüfung,* 21. Mai 2001, vol. 75